# EUROPÄISCHE PATENTSCHRIFT

(11) **EP 1 684 616 B1**
(45) Veröffentlichungstag und Bekanntmachung des Hinweises auf die Patenterteilung: **29.05.2013**
(21) Anmeldenummer: 04818803.1
(22) Anmeldetag: 18.11.2004
(51) Int. Cl.: A47C 23/00

(54) **AUFLAGERELEMENT**
SUPPORT ELEMENT
ÉLÉMENT DE SUPPORT

(30) Priorität: 18.11.2003 EP 03026388; 14.04.2004 DE 202004005844 U; 29.06.2004 DE 202004010143 U; 03.07.2004 DE 202004010433 U
(43) Veröffentlichungstag der Anmeldung: 02.08.2006
(73) Patentinhaber: Hermann Bock GmbH, 33415 Verl (DE)
(72) Erfinder: BOCK, Ernst, 33415 Verl (DE); FELDOTTO, Udo, 33415 Verl (DE)
(74) Vertreter: Stenger, Watzke & Ring
(86) Internationale Anmeldenummer: PCT/EP2004/013103
(87) Internationale Veröffentlichungsnummer: WO 2005/048781

(56) Entgegenhaltungen:
- EP-A- 1 046 361
- WO-A-01/50923
- DE-A1- 2 015 659
- DE-C- 67 765
- DE-C- 104 447
- DE-U1-202004 010 142
- FR-A- 2 102 588

## Beschreibung

Die Erfindung betrifft ein Auflagerelement, aufweisend eine Kopfplatte und ein daran angeordnetes Federelement, wobei das Federelement wendelförmig und nach Art eines Kegels ausgebildet ist, wobei die Kopfplatte und das Federelement aus Kunststoff gebildet sind.

Auflagerelemente sind aus dem Stand der Technik an sich bekannt. Sie dienen der federnden Aufnahme von Matratzen, Polstern oder dergleichen, wobei sie zur Abstützung beispielsweise einer Matratze über eine matratzenseitig angeordnete Kopfplatte verfügen. Auf der der Matratze abgewandten Seite der Kopfplatte ist ein an der Kopfplatte angeordnetes Federelement vorgesehen, das sich seinerseits an einem Traggerüst abstützt.

Bekannt geworden ist ein Auflagerelement beispielsweise aus der europäischen Patentschrift EP 0 996 349 B1. Das hier beschriebene Auflagerelement ist als Spritzgußteil ausgebildet und verfügt über einen einstückig mit dem Federelement ausgebildeten Auflageteller. Das Federelement ist als Blattfeder ausgebildet und weist von einem Basiskörper ausgehend mit dem Auflageteller verbundene Auflagearme auf, die ausgehend vom Basiskörper nach außen gerichtet, rotationssymmetrisch im Winkelabstand von 120° bis 90° am Basiskörper angeordnet sind. Um einem ungewünschten Einfedern einzelner Auflagerarme entgegenwirken zu können, verfügen die Auflagerarme über jeweils gleiche Federkonstanten.

Bedingt durch den komplizierten Aufbau ist das aus der EP 0 996 349 B1 vorbekannte Auflagerelement in seiner Herstellung in nachteiliger Weise sehr kostenaufwendig. Zudem kann es infolge einer Ungleichbelastung des Auflagetellers zu einer Überbelastung einzelner Auflagerarme kommen, was in nachteiliger Weise zu einem Funktionsausfall des gesamten Auflagerelements führen kann.

Auflagerelemente mit wendelförmig ausgebildeten Federelementen sind beispielsweise aus der DE 67 765 C und der DE 104 447 C bekannt geworden. Die Federelemente der hier beschriebenen Auflagerelemente sind als einzügige Sprungfedem ausgebildet und bestehen aus Federstahl. Von Nachteil dieser Federelemente ist, daß sie bei nicht zentrischer Kraftbeaufschlagung ausbrechen und zu einem unkontrollierten Kippen in seitlicher Richtung neigen. Zudem läßt der Federungskomfort mit der Zeit nach.

Aus der DE 2 015 659 ist ferner eine Federeinlage, insbesondere für Matratzen, Polstermöbel und dergleichen bekannt geworden. Die Federeinlage ist aus einem isotopenbestrahlten Kunststoff hergestellt, was im Unterschied zu einem spritzgusshergestellten Teil sehr viel aufwendiger und insbesondere auch kostenintensiver ist. Darüber hinaus schränkt die Verwendung eines isotopenbestrahlten Kunststoffes die Einstellung von Federeigenschaften ein.

Aus der WO 01/50923 A1 ist ein elastisches Tragelement bekannt geworden. Dieses verfügt über eine Basis, eine Auflageplatte und ein dazwischen angeordnetes Federelement. Das Federelement verfügt seinerseits über eine Mehrzahl von Federbeinen, die im Belastungsfall einknicken können, zu welchem Zweck ein jedes Federbein über eine Art Filmscharnier verfügt.

Ausgehend vom vorbeschriebenen Stand der Technik ist es **Aufgabe** der Erfindung, unter Vermeidung der vorgenannten Nachteile ein Auflagerelement zu schaffen, das bei einem gleichzeitig einfachen und damit in der Herstellung kostengünstigen Aufbau eine auch im Dauerbetrieb zuverlässige Verwendung ermöglicht.

**Gelöst** wird diese Aufgabe durch ein Auflagerelement nach Anspruch 1.

Das Auflagerelement verfügt über ein an einer Kopfplatte angeordnetes Federelement, welches wendelförmig und hinsichtlich seiner Querschnittsfläche verjüngt ausgebildet ist, wobei sich die Verjüngung ausgehend von der Kopfplatte nach Art eines Kegels zur Auflagerfläche entfernten Seite hin erstreckt. Die erfindungsgemäße Ausgestaltung des Auflagerelements zeichnet sich durch ihren einfachen Aufbau aus. Die Herstellkosten können hierdurch bedingt auf ein Minimum reduziert werden. Darüber hinaus ist von besonderem Vorteil, daß das Federelement aufgrund seines Aufbaus auch einer ungleichmäßigen Kraftbeaufschlagung des Auflagerelements sicher Stand hält. Das erfindungsgemäße Auflagerelement eignet sich damit insbesondere auch als Unterlage für Bettmatratzen, denn kommt es auch infolge einer Dauerbelegung des Bettes, wie dies beispielsweise in Kranken- oder Pflegebereichen der Fall sein kann, nicht zu einem einseitigen Funktionsausfall, wie dies in nachteiliger Weise bei den aus dem Stand der Technik bekannten Blattfederarmen auftreten kann. Im Unterschied zu den vorbekannten Auflagerelementen zeichnet sich das erfindungsgemäße Auflagerelement mithin durch seine Funktionssicherheit aus.

Auch läßt sich das erfindungsgemäße Auflagerelement sehr viel einfacher als das aus dem Stand der Technik vorbekannte Auflagerelement reinigen, was insbesondere bei einer Verwendung des Auflagerelements im Kranken- und/oder Pflegebereich von Vorteil ist.

Es ist erfindungsgemäß vorgesehen, daß das Federelement mehrzügig, vorzugsweise zwei-, drei- oder vierzügig ausgebildet ist. Erreicht wird durch die mehrzügige Ausbildung des Federelements eine verbesserte Formstabilität des gesamten Auflagerelements. Dabei werden vorzugsweise sämtliche Züge des Federelements durch nur eine Aufnahme an der Kopfplatte des Auflagerelements angeordnet, so daß auch bei einer ungleichmäßigen, das heißt einseitigen Kraftbeaufschlagung der Kopfplatte eine Krafteinleitung in sämtliche Züge des Federelements erfolgen kann. Der Überbeanspruchung einzelner Züge des Federelements wird so sicher entgegengewirkt. Die Ausbildung mehrerer Federelementezüge, d. h. Federarme, hat darüber hinaus den Vorteil, daß die auf das Auflagerelement insgesamt einwirkende Auflagerkraft der Anzahl der verwendeten Federelementezüge entsprechend aufgeteilt in die das Auflagerelement tragende Struktur abgeleitet werden kann.

Vorzugsweise ist das Federelement austauschbar an der Kopfplatte angeordnet. Kopfplatte und Federelement können so beispielsweise zu Reinigungszwecken voneinander getrennt werden. Zudem hat die zweiteilige Ausgestaltung von Federelement einerseits und Kopfplatte andererseits den Vorteil, daß sie aus unterschiedlichen Materialien gefertigt sein können, was nicht nur aus Kostengründen von Vorteil ist, auch kann so den unterschiedlichen Funktionsanforderungen von Federelement einerseits und Kopfplatte andererseits durch geeignete Materialwahl Rechnung getragen werden. Von besonderem Vorteil ist dabei in diesem Zusammenhang, daß beispielsweise in ihrer Größe unterschiedlich ausgebildete Kopfplatten mit beispielsweise hinsichtlich ihrer Federkonstante, ihrer Federkraft oder ihres Federweges unterschiedlich ausgebildeten Federelementen nach dem Baukastenprinzip miteinander kombiniert werden können. Trotz geringer Herstellkosten können so individuelle Einstellungswünsche berücksichtigt werden.

Gemäß einem weiteren Vorschlag der Erfindung ist vorgesehen, daß das Federelement verdrehsicher an der Kopfplatte angeordnet ist. Unterbunden wird so in vorteilhafter Weise eine ungewünschte Verdrehung von Federelement einerseits und Kopfplatte andererseits.

Erfindungsgemäß ist das Federelement aus Kunststoff gebildet. Dabei ist es insbesondere aus Kostengründen von Vorteil, das Federelement als Spritzgußteil aus Kunststoff zu bilden.

Gemäß einem weiteren Merkmal der Erfindung weist die Kopfplatte beispielsweise in Form von Langlöchern Durchbrüche auf. Hierdurch bedingt ergibt sich infolge der Materialeinsparung nicht nur eine Gewichtsreduzierung, auch trägt die Ausbildung von Durchbrüchen zu einer verbesserten Formstabilität der Kopfplatte bei. Darüber hinaus dienen die Durchbrüche als Luftdurchlässe zur Be- bzw. Entlüftung der kopfplattenseitig vom Auflagerelement getragenen Auflage, beispielsweise der Matratze, des Polsters oder dergleichen. Aus Kostengründen wird zudem vorgeschlagen, die Kopfplatte als Spritzgußteil aus Kunststoff zu bilden.

Erfindungsgemäß weist das Auflagerelement ein Verbindungselement auf, das zur Befestigung des Federelements an einer Trägerplatte der Kopfplatte gegenüberliegend austauschbar am Federelement angeordnet ist. Das Verbindungselement dient mithin als Verbindungsglied zwischen dem die Kopfplatte tragenden Federelement einerseits und der das Auflagerelement aufnehmenden Trägerplatte andererseits.

Gemäß der Erfindung ist vorgesehen, daß das Verbindungselement ein separates Bauteil ist, das auswechselbar am Federelement angeordnet ist. Die zweiteilige Ausgestaltung von Verbindungselement einerseits und Federelement andererseits hat den Vorteil, daß entsprechend den jeweils zu fordernden Materialeigenschaften das Verbindungselement und das Federelement aus unterschiedlichen Materialien gebildet sein können. Zur Anordnung des Auflagerelements an der Trägerplatte dient bei einer zweiteiligen Ausgestaltung von Verbindungselement und Federelement das Verbindungselement als Zwischenglied zwischen Federelement und Trägerplatte. Dabei ist das Verbindungselement vorzugsweise auswechselbar sowohl am Federelement als auch an der Trägerplatte angeordnet. Zu Reinigungszwecken kann so das Federelement vom Verbindungselement als auch das Verbindungselement von der Trägerplatte getrennt werden. Um eine ungewünschte Verdrehbewegung des Auflagerelements gegenüber der Trägerplatte zu verhindern, ist das Auflagerelement verdrehsicher an der Trägerplatte angeordnet, zu welchem Zweck das Verbindungselement sowohl am Federelement als auch an der Trägerplatte verdrehsicher angeordnet ist.

Das Verbindungselement ist nach Art eines Stopfens ausgebildet und besteht aus einem vorzugsweise thermoplastischen Kunststoff. Eine derartige Ausgestaltung hat den Vorteil, daß das Verbindungselement abdichtend in eine korrespondierende Aufnahme der Trägerplatte eingesteckt werden kann. Zudem kann das Verbindungselement aufgrund der Materialelastizität des thermoplastischen Kunststoffes ohne weitere Befestigungsmittel, wie beispielsweise Gewinde oder dergleichen, lagesicher in die korrespondierend an der Trägerplatte ausgebildete Aufnahme eingesteckt werden. Ohne die Hinzunahme eines Werkzeuges kann das Verbindungselement somit von der Trägerplatte gelöst bzw. an dieser angeordnet werden. Darüber hinaus ist das Verbindungselement auch bei unter Umständen auftretenden Erschütterungen geräuschgedämmt an der Trägerplatte angeordnet.

Es ist vorgesehen, daß die Trägerplatte eine zum Verbindungselement des Auflagerelements korrespondierend ausgebildete Aufnahme aufweist. Zwecks Verdrehsicherung kann dabei vorgesehen sein, daß das Verbindungselement hinsichtlich seines Querschnittes nicht vollkreisförmig, sondern statt dessen teilkreisförmig, ellipsenförmig oder mehreckförmig ausgebildet ist. Korrespondierend zum Querschnitt des Verbindungselements ist die in der Trägerplatte vorgesehene Aufnahme ausgebildet.

Gemäß einem weiteren Merkmal verfügt die Trägerplatte über eine Mehrzahl von vorzugsweise reihenförmig angeordneten Aufnahmen. Dies ermöglicht die Anordnung einer Mehrzahl von Auflagerelementen an der Trägerplatte. Je nach Größe der Trägerplatte können so eine Vielzahl von Auflagerelementen an der Trägerplatte vorzugsweise reihenförmig angeordnet werden. Aus Reinigungs- und Gewichtsgründen ist die Trägerplatte vorzugsweise aus Kunststoff gebildet.

Vorgeschlagen wird des weiteren ein Bett, insbesondere ein Kranken- und/oder Pflegebett, aufweisend eine aus einer Trägerplatte gemäß vorstehender Beschreibung gebildete Liegefläche. Bestückt ist die Trägerplatte matratzenseitig mit einer Mehrzahl von Auflagerelementen gemäß der vorbeschriebenen Art, vorgesehen sein kann, daß das Bett über eine Mehrzahl von vorzugsweise relativ zueinander bewegbar angeordneten Trägerplatten verfügt. Auch kann natürlich eine mit Auflagerelementen bestückte Trägerplatte als Liegefläche bzw. Unterlage für andere Möbelstücke, wie z. B. Liegen, Massageunterlagen oder dergleichen, genutzt werden.

Wie vorstehend beschrieben sind die erfindungsgemäßen Auflagerelemente auswechselbar an der die Liegefläche des Bettes bildenden Trägerplatte angeordnet. Dies ermöglicht ein bedarfsweises Entfernen der Auflagerelemente insbesondere zum Zwecke der Reinigung. Auch können in vorteilhafter Weise Liegeflächenbereiche mit Zonen unterschiedlich stark federnder Auflagerelemente geschaffen werden. In Abhängigkeit der mit den verwendeten Auflagerelementen jeweils eingesetzten Federelemente können so Liegeflächenbereiche mit unterschiedlichem Federungskomfort ausgebildet werden. Insbesondere im Kranken- und/oder Pflegebereich ist dies von Vorteil, denn kann so den individuellen Wünschen des im Kranken- und/oder Pflegebett liegenden Patienten wunschgerecht entsprochen werden.

Federelementseitig ist vorgesehen ein Federelement mit wenigstens zwei spiral- und/oder wendelförmig ausgebildeten Streifenelementen, die aus Kunststoff bestehen und als Spritzgußteil ausgebildet sind, wobei die Streifenelemente derart zusammenwirken, daß sie bei einer Kraftbeaufschlagung federnd nachgeben, wobei die Federwirkung der Streifenelemente durch geeingnete Geometrie- und/oder Materialwahl vorgebbar ist.

Mit dieser Konstruktion wird ein aus Kunststoff bestehendes Federelement vorgeschlagen. Gebildet ist das Federelement aus wenigstens zwei Streifenelementen, die spiral-und/oder wendelförmig ausgebildet sind.

Bei einer Kraftbeaufschlagung des Federelements geben die Streifenelemente federnd nach, infolgedessen sich eine Federwirkung einstellt. Durch geeignete Geometrie-und/oder Materialwahl kann die Federwirkung der Streifenelemente bedarfsgerecht, d. h. anwendungsbezogen vorgegeben werden. Dies ermöglicht in vorteilhafterweise eine vielseitige Einsetzbarkeit des erfindungsgemäßen Federelements.

Geometriewahl im Sinne der Erfindung bedeutet, daß die Geometrie der Streifenelemente an die bei einem bestimmungsgemäßen Einsatz des Federelements zu erwartende Kraftbeaufschlagung entsprechend angepaßt ist, so daß sie der wunschgemäß zu erzielenden Federwirkung gerecht wird. Vorgegeben werden können in diesem Sinne Quer- und Längserstreckung, Querschnittsform und dergleichen der Streifenelemente einerseits, wie auch die geometrische Ausgestaltung des durch die spiral- oder wendelförmig ausgebildeten Streifenelemente gebildeten Federkörpers andererseits. So kann beispielsweise bei einer wendelförmigen Ausgestaltung der Streifenelemente vorgesehen sein, daß der hierdurch gebildete Federkörper nach Art eines Kegels ausgebildet ist. Auch kann vorgesehen sein, daß der Federkörper eine im wesentlichen zylindrische Form aufweist. Die Besonderheit der Erfindung liegt darin, daß die beispielhaft voraufgeführten Geometrien je nach Anwendungsfall bedarfsgerecht ausgebildet werden können, wobei die Herstellung unabhängig von der gewählten Geometrie kostengünstig ist, da das Federelement als Spritzgußteil ausgebildet ist. Die vorgebbare Geometrie des Federelements schafft breite Anwendungsmöglichkeiten, womit das Federelement in vorteilhafterweise vielseitig einsetzbar ist.

Unter Materialwahl im Sinne der Erfindung ist zu verstehen, daß zur Ausbildung der Streifenelemente ein solcher Kunststoff eingesetzt wird, der hinsichtlich seiner Materialeigenschaften an die im Anwendungsfall auftretenden Kraftbeaufschlagungen entsprechend angepaßt ist. So ist das verwendete Kunststoffmaterial derart auszuwählen, daß einerseits eine hinreichende Materialfestigkeit und andererseits die gewünschte Federsteifigkeit erreicht wird. Zudem sollte das gewählte Material korrosionsbeständig und unempfindlich gegenüber Pflege- und Reinigungsmitteln sein.

Gegenüber herkömmlichen Federelementen weist das erfindungsgemäße Federelement ferner den Vorteil auf, daß es gewichtsoptimiert ausgebildet, leicht zu handhaben und hinsichtlich Herstellung und Montage kostengünstig ist. Zudem kann es auf "Null" gedrückt werden, d. h. es kann in Höhenrichtung bis auf Anschlag zusammengedrückt werden, womit ein in Bezug auf die Längserstreckung des Federelements in Höhenrichtung außerordentlich langer Federweg zur Verfügung gestellt wird.

Gemäß einem weiteren Merkmal sind die Streifenelemente einstückig ausgebildet. Die Streifenelemente können mithin in Form eines Bauteils ausgebildet sein, das im Spritzgußverfahren hergestellt ist. Die Ausbildung beider Streifenelemente als ein Bauteil hat den Vorteil, daß es einer Verbindung der beiden Streifenelemente nicht bedarf. Vielmehr können diese nach ihrer Herstellung direkt als Federelement eingesetzt werden. Dies erlaubt eine kostengünstige Herstellung sowie eine in einfacher Weise durchzuführende Montage.

Gemäß einem weiteren Merkmal sind die Streifenelemente gleichsinnig spiral- und/oder wendelförmig ausgebildet. Dabei sind die Streifenelemente vorzugsweise entsprechend ihrer Spiral- und/oder Wendelform versetzt angeordnet, so daß bei einer bestimmungsgemäßen Verwendung des Federelements aufzunehmende Kräfte gleichförmig von den Streifenelementen aufgenommen werden können. Dabei erlaubt die Ausbildung der Streifenelemente sowohl eine Biege- als auch eine Torsionsbeanspruchung.

Gemäß einem weiteren Merkmal sind die Streifenelemente Mehrkörperelemente. Mehrkörperelemente im Sinne der Erfindung bedeutet, daß die Streifenelemente aus miteinander verbundenen, unterschiedlichen Körperelementen gebildet sein können. So kann beispielsweise ein jedes Streifenelement aus einem ersten Kunststoffmaterial gebildet sein, welches von einem zweiten Kunststoffmaterial umhüllend umgeben ist. Auch können die aus Kunststoff gebildeten Streifenelemente eine Einlage beispielsweise aus Metall aufweisen. Je nach zu erwartender Kraftbeaufschlagung können die Streifenelemente auch abschnittsweise aus unterschiedlichen Körperelementen gebildet sein. So ist beispielsweise denkbar, daß die Streifenelemente in Längsrichtung aus jeweils unterschiedlichen Körperelementen bestehen, wobei sich die Körperelemente hinsichtlich Geometrie und Material unterscheiden können. So kann beispielsweise vorgesehen sein, daß sich die Streifenelemente in Längsrichtung verjüngen. Die Verjüngung kann dabei kontinuierlich oder stufenweise ausgebildet sein. Auch können die Streifenelemente mit Stütz- oder Verstärkungsrippen versehen sein.

Gemäß einem weiteren Merkmal weisen die Streifenelemente einen von der Kreisform abweichenden Querschnitt auf. Denkbar sind beispielsweise rechteckförmige Querschnitte, die insbesondere mit Blick auf eine Biegebeanspruchung vorteilhaft sind. Auch ist es denkbar, einseitig offene Querschnitte, wie beispielsweise U-förmige Querschnitte, auszubilden, die sich durch eine hohe Biegesteifigkeit und eine geringe Torsionssteifigkeit auszeichnen. Auch können aus Gewichtsgründen Hohlquerschnitte vorgesehen sein.

Gemäß einem weiteren Merkmal weisen die Streifenelemente einen sich in Längsrichtung der Streifenelemente ändernden Querschnitt auf. So können die Streifenelemente beispielsweise in Längsrichtung eine abnehmende Querschnittsfläche aufweisen, so daß die Streifenelemente in Längsrichtung verjüngt ausgebildet sind. Auch können Querschnittsformen vorgesehen sein, die eine Verjüngung der Streifenelemente lediglich im mittleren Bereich vorsehen.

Gemäß einer besonderen Ausgestaltungsform wird vorgeschlagen, ein Federelement mit zwei als Federarmen ausgebildeten, spiral- oder wendelförmigen Streifenelementen, einem Basisabschnitt und einem dem Basisabschnitt in Höhenrichtung des Federelements gegenüberliegenden Kopfabschnitt, wobei Basisabschnitt, Kopfabschnitt und Federarme jeweils aus Kunststoff bestehen und als Spritzgußteil ausgebildet sind.

Ein solch ausgebildetes Federelement zeichnet sich durch seine kompakte Bauform aus. Es ist vorzugsweise einstückig ausgebildet und besteht aus einem vorzugsweise pflegeleichten Kunststoff. Gebildet ist das Federelement aus zwei als Federarme dienenden Streifenelementen, die sich ausgehend von einem Basisabschnitt vorzugsweise wendelförmig in Höhenrichtung erstrecken und an einem dem Basisabschnitt in Höhenrichtung gegenüberliegenden Kopfabschnitt angeschlossen sind. Der Kopfabschnitt ist vorzugsweise ringförmig ausgebildet, wobei die kopfabschnittseitigen Endbereiche der Federseite innenumfangsseitig am Kopfabschnitt angeordnet sind.

Das Federelement kann in vorteilhafter Weise für unterschiedlichste Verwendungszwecke Anwendung finden. So kann es beispielsweise als Bettmatratzenunterlage dienen. Dabei sind je nach Größe der aufzunehmenden Bettmatratze eine Mehrzahl von Federelementen zu verwenden, die vorzugsweise in Reihen nebeneinander angeordnet eine gemeinsame Auflagerfläche für die federnd abzustützende Bettmatratze bilden.

Getragen werden die Federelemente von einer Tragkonstruktion, die beispielsweise in Form eines Lattenrostes ausgebildet ist. Auch kann die Tragkonstruktion aus einzelnen relativ zueinander bewegbar angeordneten Liegeflächenelementen oder sonstwie ausgebildet sein. Entscheidend ist, daß das erfindungsgemäße Federelement unabhängig von der anwenderseitig verwendeten Tragkonstruktion ist, denn besteht die Besonderheit des erfindungsgemäßen Federelements in der Möglichkeit, dieses nach dem Baukastenprinzip mit unterschiedlichst ausgebildeten Tragkonstruktionen zu kombinieren.

So kann das Federelement auch als Polsterunterlage für Sitzmöbel, wie Stühle, Sofas oder dergleichen dienen. Auch ist der Einsatz des Federelements als Stützelement für die Sitz- und Rückenfläche eines Pkw- und/oder LKW-Sitzes denkbar.

Das Federelement kann auf einfache Weise, beispielsweise mit Wasser unter etwaiger Zugabe von Reinigungs- und Pflegemitteln gereinigt werden. Es ist korrosionsbeständig und eignet sich daher auch für den Einsatz im Außenbereich, beispielsweise als Sitzunterlage für Camping- und/oder Gartenstühle und/oder -liegen.

Die durch das Federelement bewirkte Federkraft wird in erster Linie durch die beiden wendelförmig ausgebildeten Federarme bestimmt. Je nach gewünschter Federkraft können die Federarme wunschgemäß hinsichtlich Federarmlänge, Wendelung, Materialstärke, Querschnittsausbildung und dergleichen ausgeformt werden. Auch läßt sich die Federsteifigkeit der Federarme über die Wahl des eingesetzten Kunststoffes wahlweise festlegen.

Die Besonderheit des Federelements besteht darin, daß dieses als einstückig ausgebildetes Kunststoffteil im Spritzgußverfahren auf einfache Weise hergestellt werden kann. Aufgrund seiner kompakten Bauform ist es vielseitig einsetzbar und kann sowohl als Einzelbauteil als auch in Kombination mit Anschlußbauteilen, wie beispielsweise einer mehrere Federelemente aufnehmenden Tragkonstruktion eingesetzt werden. Das erfindungsgemäße Federelement ist witterungsbeständig, insbesondere korrosionsbeständig und kann unter Einsatz von Wasser leicht gereinigt werden. Zudem gewährleistet die erfindungsgemäße Konstruktion des Federelements eine einfache Handhabung desselben, insbesondere mit Blick auf Montage bzw. Demontage.

Kombiniert werden kann das Federelement mit einer kopfabschnittseitig anzuordnenden Kopfplatte, die als Auflagerfläche für die mit dem Federelement federnd zu lagernde Auflage dient. Dabei können mehrere Federelement einer gemeinsamen Kopfplatte zugeordnet sein.

Zwecks Verwendung des Federelements in Kombination mit einer kopfabschnittseitig anzuordnenden Kopfplatte weist der Kopfabschnitt des Federelements vorzugsweise umfangsseitig Ausnehmungen auf. Derlei Ausnehmungen dienen einer verdrehsicheren Anordnung des Federelements an einer Kopfplatte, zu welchem Zweck die Kopfplatte zu den kopfabschnittseitig des Federelements vorgesehenen Ausnehmungen korrespondierend ausgebildete Haltemittel aufweist, die nach einer Montage von Federelement und Kopfplatte in die Ausnehmungen des Federelements eingreifen. Sichergestellt wird auf diese Weise eine verdrehsichere Anordnung von Federelement einerseits und Kopfplatte andererseits.

Für die lagesichere Anordnung eines Federelements an einer kopfabschnittseitig anzuordnenden Kopfplatte verfügt der Kopfabschnitt vorzugsweise über Durchbrüche. Ausgebildet sind diese Durchbrüche vorzugsweise in Form von Langlöchern, die als Teil eines Bajonettverschlusses ausgebildet sind und Abschnitte unterschiedlicher Quererstreckung aufweisen. An der Kopfplatte korrespondierend ausgebildete Halteelemente können zwecks Montage von Federelement und Kopfplatte in die Durchbrüche des Federelements eingesetzt und durch Relativverdrehung gegenüber dem Federelement in den dafür vorgesehenen Durchbrüchen des Federelements verrastet werden. Die am Federelement ausgebildeten Durchbrüche bilden in Kombination mit den an der Kopfplatte ausgebildeten Halteelementen einen leicht zu öffnenden bzw. zu verschließenden Bajonettverschluß. Federelement und Kopfplatte können mithin auf einfache Weise miteinander verbunden werden. Die Verbindung zwischen Federelement und Kopfplatte ist dank dem Bajonettverschluß im Bedarfsfall einfach zu lösen, was insofern von Vorteil ist, als daß das Federelement zwecks Reinigung von der Kopfplatte in einfacher Art und Weise gelöst werden kann. In Kombination mit den umfangsseitig am Kopfabschnitt des Federelements ausgebildeten Ausnehmungen wird über den Bajonettverschluß eine verdrehsichere und kräfteübertragende Verbindung zwischen Federelement und Kopfplatte geschaffen.

Vorzugsweise weist der Kopfabschnitt des Federelements auf seiner dem Basisabschnitt zugewandten Unterseite Versteifungsrippen auf. Diese Versteifungsrippen dienen der zusätzlichen Stabilisierung des Kopfabschnittes des Federelements. Als besonders vorteilhaft hat sich die Ausgestaltung einer Versteifungsrippe in Form einer ringförmig umlaufenden Verdickung herausgestellt, die vorzugsweise unterseitig am Kopfabschnitt angeordnet ist. Zudem können die Durchbrüche des Kopfabschnittes mit einer sie umgebenden Versteifungsrippe versehen sein. Die mit Blick auf die Ausbildung des Bajonettverschlusses vorzugsweise unterseitig des Kopfabschnittes vorgesehenen Rastmittel können gemäß einem besonderen Merkmal der Erfindung integraler Bestandteil einer oder mehrerer der unterseitig am Kopfabschnitt ausgebildeten Versteifungsrippen sein. Diese Ausgestaltungsform ermöglicht eine insbesondere kostengünstige Herstellung.

Der Basisabschnitt des Federelements ist gemäß einem weiteren Merkmal mit wenigstens einem Mittel zur Anordnung an einem Gegenstück verbindbar. Als Gegenstück kommen Tragkonstruktionen unterschiedlichster Bauart in Betracht, an denen das Federelement angeordnet sein kann. Gegenstücke in diesem Sinne können Liegeflächenelemente, Gitterrahmenkonstruktionen, Lattenroste oder dergleichen sein. Gebildet ist das Mittel zur Anordnung an einem Gegenstück aus einem vorzugsweise stiftartigen Fortsatz. Zur Anordnung des Federelements an einer Tragkonstruktion verfügt diese über eine korrespondierend zum stiftartigen Fortsatz ausgebildete Ausnehmung, in die dieser zwecks Anordnung des Federelements an der Tragkonstruktion in einfacher Weise eingesteckt werden kann. Umgeben sein kann der stiftartige Fortsatz von einem leicht elastischen Material, so daß dieser unter Einformung des elastischen Materials in die an der Tragkonstruktion ausgebildete Ausnehmung lagesicher eingepreßt werden kann. Das elastische Material dient zudem als Geräuschdämmungskomponente.

Begründet durch die Möglichkeit, das Federelement auswechselbar an einer Tragkonstruktion anzuordnen, ist dieses für unterschiedlichste Einsatzgebiete individuell verwendbar. Mit herkömmlichen aus dem Stand der Technik bisher bekannten Federelementen ist dies nicht möglich. Gleiches gilt für die optionale Möglichkeit, kopfabschnittseitig am Federelement eine Kopfplatte anzuordnen. Unterschiedlichsten Anwendungsfällen kann so bedarfsgerecht Rechnung getragen werden, was mit den aus dem Stand der Technik bisher bekannten Federelementen nicht möglich war.

Gemäß einem weiteren Merkmal sind die kopfabschnittseitigen Endbereiche der Federarme am Kopfabschnitt angeordnet, wobei sie vorzugsweise einander gegenüberliegend ausgerichtet sind. Ausgehend vom Basisabschnitt weisen die Federarme eine Wendelung von mehr als 180°, vorzugsweise von mehr als 270° auf. Gemäß einer bevorzugten Ausführungsform beträgt die Wendelung der Federarme ausgehend vom Basisabschnitt 360°.

Der Basisabschnitt des Federelements ist vorzugsweise S-förmig ausgebildet und verbindet die beiden basisabschnittseitig vorgesehenen Endbereiche der Federarme.

Der Außendurchmesser des ringförmig ausgebildeten Kopfabschnittes kann je nach Anwendungsfall bedarfsgerecht ausgelegt werden. Bevorzugterweise weist der Außendurchmesser eine Größe von 5 bis 14 cm, vorzugsweise von 9 bis 13 cm, vorzugsweise von 10 bis 12 cm auf. Gemäß einer besonderen Ausgestaltungsform der Erfindung weist der Außendurchmesser eine Größe von 11 cm auf.

Gemäß einem weiteren Merkmal weist das Federelement in Höhenrichtung eine Längserstreckung von 3 cm bis 7 cm, vorzugsweise von 4 cm bis 6 cm auf. Gemäß einer besonderen Ausgestaltungsform der Erfindung beträgt die Längserstreckung des Federelements in Höhenrichtung 5 cm.

Was die Größenabmessungen des Federelements angeht, so versteht sich von selbst, daß diese in Anbetracht des Anwendungsfalles, das heißt je nach gewünschter Federkraft wahlweise ausgebildet sein können. Auch ist es natürlich möglich, Federelemente unterschiedlicher Größe miteinander zu kombinieren. So können beispielsweise bei einer Verwendung von mehreren Federelementen als Unterlage für eine Bettmatratze diejenigen Federelemente, die bei einer bestimmungsgemäßen Verwendung des Bettes die größte Last aufzunehmen haben, hinsichtlich ihrer geometrischen Abmessungen größer gestaltet sein, als diejenigen Federelemente, die eine vergleichsweise geringere Belastung aufzunehmen haben. So können beispielsweise die Federelemente im Kopfbereich der Matratze kleiner ausgebildet sein, als diejenigen Federelemente, die im mittleren Bereich zur Stützung der Matratze vorgesehen sind.

Insgesamt wird mit dem Federelement ein kompaktes und hinsichtlich Montage- bzw. Demontage leicht zu handhabendes Bauelement zur Verfügung gestellt, das mit weiteren Baukomponenten, wie beispielsweise Tragkonstruktion und/oder Kopfplatte zwecks bestimmungsgemäßer Verwendung in einfacher Weise kombiniert werden kann. Der Verwendung des erfindungsgemäßen Federelements sind insofern keinerlei Grenzen gesetzt und es kann je nach gewünschtem Federungskomfort hinsichtlich Größenabmessungen, Federkomfort und Federsteifigkeit bedarfsgerecht ausgebildet werden. Erfindungswesentlich ist allein, daß das aus Federarmen, Basisabschnitt und Kopfabschnitt bestehende Federelement aus Kunststoff besteht und einstückig ausgebildet ist.

Vorgeschlagen wird mit des weiteren ein Federmodul, gebildet aus einem Federelement der vorbeschriebenen Art und einer kopfabschnittseitig am Federelement angeordneten Kopfplatte. Dabei können mehrere Federelemente an ein- und derselben Kopfplatte angeordnet sein. Gebildet ist die Kopfplatte vorzugsweise aus Kunststoff und wird im Spritzgußverfahren hergestellt. Die Kopfplatte kann gemäß ihrer bestimmungsgemäßen Verwendung entsprechend ausgebildet sein und eine beispielsweise kreisförmige, ellipsenförmige, rechteckförmige oder dergleichen ausgebildete Auflagerfläche ausbilden. Zudem kann die Kopfplatte Durchbrüche, Versteifungsrippen oder dergleichen aufweisen.

Vorzugsweise ist die Verbindung zwischen Kopfplatte einerseits und Federelement andererseits derart ausgebildet, daß sie auf einfache Weise bedarfsgerecht ausgebildet bzw. gelöst werden kann. Insbesondere aus Gründen der Hygiene ist eine solche lösbare Anordnung von Kopfplatte und Federelement von Vorteil, da Kopfplatte und Federelement zwecks Reinigung voneinander gelöst werden können. Für eine lagesichere Anordnung der Kopfplatte ist das Federelement an derselben verdrehsicher angeordnet.

Das Federmodul weist basisabschnittseitig am Federelement ein Verbindungsmittel auf, das der Anordnung des Federelements an einer Tragkonstruktion dient. Ausgebildet ist das Verbindungsmittel vorzugsweise in Form einer Steckverbindung, so daß das Federelement basisabschnittseitig auf einfache Weise an einer entsprechend ausgebildeten Tragkonstruktion angeordnet werden kann.

Bezüglich der Kopfplatte wird vorgeschlagen, ein Aufnahmeelement zur zumindest bereichsweisen Aufnahme einer Matratze, eines Polsters oder dergleichen, wobei mehrere einander nebengeordnete Aufnahmeelemente eine gemeinsame Auflagerfläche bilden, dadurch gekennzeichnet, daß dieses plattenförmig, nach Art eines Tellers ausgebildet ist und Mittel zur lösbaren Anordnung an einem Tragelement aufweist.

Das als Auflagerteller oder Kopfplatte dienende Aufnahmeelement ist als separates Bauteil ausgebildet. Es verfügt über Mittel zur lösbaren Anordnung an einem Tragelement, beispielsweise einem Federelement, so daß es wahlweise mit einem Tragelement zur bestimmungsgemäßen Verwendung kombiniert werden kann. Diese Art der Ausgestaltung hat mehrere Vorteile. Zum einen kann das Aufnahmeelement nach dem Baukastenprinzip mit unterschiedlich ausgebildeten Tragelementen wahlweise kombiniert werden. Es ist daher möglich, bezogen auf den jeweiligen Anwendungsfall, ein wie auch immer ausgestaltetes Tragelement mit dem erfindungsgemäßen Aufnahmeelement zu kombinieren. Es kann beispielsweise vorgesehen sein, daß das Tragelement als federelastisches Element ausgebildet ist. Auch kann das Tragelement beispielsweise als reines Stützelement ausgebildet sein, welches über keinerlei federelastischen Eigenschaften verfügt. Die Möglichkeit, das erfindungsgemäße Auflagerelement nach dem Baukastenprinzip mit in ihrer Funktion unterschiedlich ausgestalteten Tragelementen kombinieren zu können, ist insbesondere aus wirtschaftlichen Gründen von Vorteil, denn bedarf es trotz der unterschiedlichen Funktion verwendbarer Tragelemente nicht unterschiedlicher Aufnahmeelemente, vielmehr kann ein und dasselbe Aufnahmeelement mit unterschiedlich ausgestalteten Tragelementen kombiniert werden. Von Vorteil ist des weiteren, daß das Aufnahmeelement lösbar am Tragelement anordbar ist, denn wird dem Verwender hierdurch die Möglichkeit eröffnet, das Aufnahmeelement beispielsweise zu Zwecken der vereinfachten Reinigung vom Tragelement zu trennen. Tragelement und Aufnahmeelement können mithin getrennt voneinander gereinigt werden. Von Vorteil ist die lösbare Anordnung im übrigen auch im Falle einer unter Umständen nötig werdenden Reparatur. Ohne daß nämlich das Tragelement auszutauschen wäre, kann ein unter Umständen defektes Aufnahmeelement vom jeweils zugehörigen Tragelement entfernt und durch ein neues Aufnahmeelement ersetzt werden. Entsprechendes gilt natürlich auch für den Austausch eines Tragelements, denn kann das hieran angeordnete Aufnahmeelement auch in Kombination mit einem neu eingesetzten Tragelement verwendet werden. Die erfindungsgemäße Ausgestaltung erweist sich mithin nicht nur als handhabungsfreudig, sie erlaubt auch eine Kostenreduzierung insbesondere im Reparaturfall, da zum einen ein Austausch des Aufnahmeelements ohne gleichzeitigen Austausch des Tragelements möglich ist, und da zum anderen die Möglichkeit besteht, ein Tragelement gegen ein anderes auszutauschen, ohne daß dies den Einsatz eines neuen Aufnahmeelementes erforderlich machen würde, denn kann dieses sowohl mit dem einen als auch mit dem anderen Tragelement kombiniert werden. Dabei erweist sich die auswechselbare Anordnung von Aufnahmeelement einerseits und Tragelement andererseits nicht nur im Reparaturfall als vorteilhaft, denn eignet sich das erfindungsgemäße Aufnahmeelement dazu, mit unterschiedlich ausgestalteten Tragelementen kombiniert zu werden, weshalb je nach Anwendungsfall in ihrer Funktion unterschiedlich ausgebildete Tragelemente mit ein und demselben Aufnahmeelement kombiniert werden können, was insbesondere bei einer Verwendung des erfindungsgemäßen Aufnahmeelements im Bereich der Kranken- und/oder Pflegebetten von Vorteil ist. So kann beispielsweise vorgesehen sein, daß die eingesetzten Tragelemente auf die Bedürfnisse des im Bett liegenden Patienten abgestimmt sind, zu welchem Zweck die Tragelemente bei einer neuen Ingebrauchnahme des Kranken-und/oder Pflegebettes auf die Bedürfnisse der im Bett liegende Person abgestimmt werden. Unter Verwendung ein und derselben Aufnahmeelemente können zu diesem Zweck besonders ausgestaltete Tragelemente zumindest bereichsweise eingesetzt werden.

Gemäß einem weiteren Merkmal ist das Aufnahmeelement einstückig ausgebildet, was insbesondere der vereinfachten Herstellung und Handhabung dient. Vorzugsweise besteht das Aufnahmeelement aus Kunststoff und ist als Spritzgußteil ausgebildet, was den Vorteil hat, daß es korrosionsbeständig gegenüber äußeren Einflüssen, wie beispielsweise Wasser oder Urin ist. Zudem kann ein aus Kunststoff bestehendes Aufnahmeelement auf einfache Weise, beispielsweise unter Verwendung von Wasser gereinigt werden. Auch verfügt ein aus Kunststoff hergestelltes Aufnahmeelement über ein vergleichsweise geringes Gewicht, wodurch eine vereinfachte Handhabung ebenfalls begünstigt wird.

Gemäß einer alternativen Ausgestaltungsform kann das Aufnahmeelement eine Einlage aus Metall aufweisen, was aus Stabilitätsgründen insbesondere dann von Vorteil sein kann, wenn vom Aufnahmeelement größere Gewichte aufzunehmen sind, beispielsweise dann, wenn die von den Aufnahmeelementen zu tragende Auflast besonders hoch ist. Anwendungsbeispiel für derart hohe Lasten sind Betten, insbesondere Kranken- und/oder Pflegebetten für schwergewichtige Personen.

Gemäß einem weiteren Merkmal ist vorgesehen, daß das Aufnahmeelement verdrehsicher und/oder verschiebsicher am Tragelement anordbar ist, zu welchem Zweck das Aufnahmeelement entsprechend ausgebildete Rastmittel aufweist. Als Rastmittel in diesem Sinne können beispielsweise Schnappverschlüsse vorgesehen sein, die im montierten Zustand in entsprechend ausgebildete Vertiefungen am Tragelement eingreifen. Als Rastmittel können auch stiftförmig ausgebildete Fortsetze eingesetzt werden, die in entsprechend ausgebildete Bohrungen am Tragelement im montierten Zustand von Aufnahmeelement und Tragelement eingreifen. Selbstredend können als Rastmittel auch andere Befestigungsarten dienen, wie z. B. Schrauben oder dergleichen.

Gemäß einem weiteren Merkmal verfügt das Aufnahmeelement über Durchbrüche. Sinn und Zweck solcher Durchbrüche ist es, die vom Aufnahmeelement aufgenommene Matratze, Polster oder dergleichen atmungsaktiv aufzunehmen, d. h. dafür Sorge zu tragen, daß die Matratze, das Polster oder dergleichen über die im Aufnahmeelement ausgebildeten Durchbrüche auch unterseitig mit der die Matratze, das Polster oder dergleichen umgebenden Atmosphäre in Verbindung steht.

Gemäß einem weiteren Merkmal weist das Aufnahmeelemente einen kreisförmigen Abschnitt einerseits und einen daran angeordneten Flächenabschnitt andererseits auf. Auch können mehrere am kreisförmigen Abschnitt angeordnete Flächenabschnitte vorgesehen sein, wobei im bevorzugten Fall von zwei Flächenabschnitten diese einander gegenüberliegend am kreisförmigen Abschnitt angeordnet sind. Sowohl der kreisförmige Abschnitt als auch der daran angeordnete Flächenabschnitt bzw. die daran angeordneten Flächenabschnitte dienen der abstützenden Aufnahme der vom Aufnahmeelement aufzunehmenden Matratze, Polster oder dergleichen. Zwecks lösbarer Anordnung des Aufnahmelements am Tragelement verfügt der kreisförmige Abschnitt auf seiner der Matratze, dem Polster oder dergleichen abgewandten Seite über einen Aufnahmebereich, welcher dazu dient, den zum Aufnahmebereich des Aufnahmeelements korrespondierend ausgebildeten Abschnitt des Tragelement aufzunehmen. Eine verdreh- und/oder verschiebsichere Anordnung des Aufnahmeelements gegenüber dem Tragelement kann dabei zudem dadurch unterstützt werden, daß der kreisförmige Abschnitt auf seiner der Matratze, dem Polster oder dergleichen abgewandten Seite einen umlaufenden und aus der Ebene des kreisförmigen Abschnitts herausragenden Kragen trägt.

Die vorbeschriebenen Konstruktion des Aufnahmeelements hat sich als besonders robust und auch größeren Belastungen standhaltend herausgestellt. Um die Stabilität des Aufnahmeelements weiter zu steigern, kann gemäß einem weiteren Merkmal der Erfindung vorgesehen sein, daß das Aufnahmeelement den kreisförmigen Abschnitt mit dem Flächenabschnitt bzw. den Flächenabschnitten verbindende Verstärkungsrippen aufweist. Diese Verstärkungsrippen bewirken in vorteilhafter Weise eine Versteifung des gesamten Aufnahmeelements, was insbesondere mit Blick auf die auch bei einer bestimmungsgemäßen Verwendung des Aufnahmeelements auftretenden Biegebeanspruchungen von Vorteil ist.

Gemäß einem weiteren Merkmal ist innerhalb des kreisförmigen Abschnitts ein Mittelabschnitt angeordnet, in welchen Mittelabschnitt die Verstärkungsrippen münden. Auch diese konstruktive Ausgestaltung bewirkt eine zusätzliche Stärkung des Aufnahmeelements, insbesondere deshalb, weil die auf das Aufnahmeelement während eines bestimmungsgemäßen Einsatzes einwirkenden Kräfte gleichmäßig über das gesamte Aufnahmeelement verteilt werden können. Nicht zuletzt auch aus diesem Grunde ist das Aufnahmeelement vorzugsweise spiegel- und/oder rotationssymmetrisch ausgebildet.

Gemäß einem weiteren Merkmal trägt der Flächenabschnitt oder die Flächenabschnitte auf seiner/ihrer der Matratze, dem Polster oder dergleichen zugewandten Seite Rippen. Diese Rippen dienen zum einen der Versteifung des Flächenabschnitts bzw. der Flächenabschnitte, zum anderen helfen sie, eine ungewollte Relativverschiebung zwischen Aufnahmeelement und darauf abgelegter Matratze, abgelegtem Polster oder dergleichen zu verhindern. Insofern wirken die am Flächenabschnitt bzw. den Flächenabschnitten angeordneten Rippen als Antirutschmittel.

Gemäß einem weiteren Merkmal ist das Tragelement ein federelastisches Element. Auch können andere Ausgestaltungsformen bezüglich des Tragelements vorgesehen sein, entscheidend ist jedoch, daß das Tragelement mit dem daran anzuordnenden Aufnahmeelement lösbar verbindbar ist. Zu diesem Zweck verfügt das Tragelement gemäß einem weiteren Merkmal der Erfindung aufnahmeelementseitig über einen korrespondierend zum Aufnahmebereich des Aufnahmeelements ausgebildeten Abschnitt. Dieser Abschnitt ragt im montierten Zustand von Aufnahmeelement und Tragelement in den am Aufnahmeelement ausgebildeten Aufnahmebereich hinein. Dabei sorgt der am Aufnahmeelement unterseitig angeordnete und den Aufnahmebereich umgebende Kragen dafür, daß es nicht zu einer ungewollten Verschiebung des Aufnahmeelements gegenüber dem Tragelement kommt. Zwecks verdrehsicherer Anordnung des Aufnahmeelements am Tragelement können am Aufnahmeelement entsprechend ausgebildete Mittel vorgesehen sein, beispielsweise in Form einer Nocken-Nut-Anordnung. Auch können Tragelement und Aufnahmeelement selbstverständlich miteinander verschraubt sein.

Gemäß einem weiteren Merkmal ist vorgesehen, daß der dem Aufnahmeelement gegenüberliegende Endbereich des Tragelements Mittel zur Anordnung des Tragelements an einer Tragkonstruktion aufweist. Als Tragkonstruktion kann beispielsweise die Liegefläche eines Bettes, insbesondere eines Kranken- und/oder Pflegebettes vorgesehen sein. Diese Liegefläche kann derart ausgestaltet sein, daß sie eine Vielzahl von vorzugsweise einander nebenzuordnender Tragelement aufnimmt, die ihrerseits jeweils ein zugehöriges Aufnahmeelement tragen. Mehrere einander nebengeordnete Aufnahmeelemente bilden dann eine gemeinsame Auflagerfläche zur Aufnahme der Matratze, des Polsters oder dergleichen. Gemäß einer alternativen Ausgestaltung der Erfindung kann auch vorgesehen sein, daß das Aufnahmeelement durch mehr als nur ein Tragelement abgestützt wird, beispielsweise durch zwei, drei oder vier.

Im montierten Zustand bilden das Aufnahmeelement und das hieran lösbar angeordnete Tragelement eine einfach zu handhabende Einheit aus, die als Auflagerelement bezeichnet werden kann. Das aus Aufnahmeelement und Tragelement bestehende Auflagerelement kann herstellerseitig vormontiert an den Verwender geliefert werden. Selbstredend ist es natürlich auch möglich, Aufnahmeelement und Tragelement voneinander separiert an den Verwender zu geben, welcher dann das Aufnahmeelement bestimmungsgemäß am Trägerelement anzuordnen hat. Die austauschbare Anordnung von Aufnahmeelement und Trägerelement hat dabei nicht nur den Vorteil, daß sie beispielsweise zu Reinigungszwecken voneinander getrennt werden können, auch ist die zweiteilige Ausgestaltung insofern von Vorteil, als daß das Aufnahmeelement und das Trägerelement aus unterschiedlichen Materialien gefertigt sein können, was nicht nur aus Kostengründen von Vorteil ist, auch kann so den unterschiedlichen Funktionsanforderungen von Aufnahmeelement einerseits und Tragelement andererseits durch geeignete Materialwahl Rechnung getragen werden. Von besonderem Vorteil ist dabei in diesem Zusammenhang, daß beispielsweise in ihrer Größe unterschiedlich ausgebildete Aufnahmeelemente mit unterschiedlich ausgebildeten Tragelementen kombiniert werden können, so z. B. bei der Ausgestaltung des Tragelements als Federelement mit hinsichtlich ihrer Federkonstante, ihrer Federkraft oder ihres Federweges unterschiedlich ausgebildeten Tragelementen. Trotz geringer Herstellkosten können so individuelle Einstellungswünsche berücksichtigt werden.

Das als Kopfplatte austauschbar am Tragelement anordbare Aufnahmeelement verfügt vorzugsweise über Durchbrüche, wodurch sich infolge der Materialeinsparung nicht nur eine Gewichtsreduzierung ergibt, auch trägt die Ausbildung von Durchbrüchen zu einer verbesserten Formstabilität des Aufnahmeelements bei. Darüber hinaus dienen die Durchbrüche als Luftdurchlässe zur Be- bzw. Entlüftung der vom Aufnahmeelement bei einer bestimmungsgemäßen Verwendung aufgenommenen Auflage, beispielsweise in Form einer Matratze, eines Polsters oder dergleichen.

Zur Anordnung des Tragelements an einer Tragkonstruktion wird vorgeschlagen, daß das Tragelement auf seiner dem Aufnahmeelement im montierten Zustand gegenüberliegenden Seite ein Verbindungselement trägt. Das Verbindungselement dient als Verbindungsglied zwischen dem das Aufnahmeelement tragenden Tragelement einerseits und der das Tragelement aufnehmenden Tragkonstruktion andererseits.

Es ist vorgesehen, daß das Verbindungselement ein separates Bauteil ist, das auswechselbar am Tragelement anordbar ist. Die zweiteilige Ausgestaltung von Verbindungselement einerseits und Tragelement andererseits hat den Vorteil, daß entsprechend den jeweils zu fordernden Materialeigenschaften das Verbindungselement und das Tragelement aus unterschiedlichen Materialien gebildet sein können. Zur Anordnung des Tragelements an der Tragkonstruktion dient bei einer zweiteiligen Ausgestaltung von Verbindungselement und Tragelement das Verbindungselement als Zwischenglied zwischen Tragelement und Tragkonstruktion. Dabei ist das Verbindungselement vorzugsweise auswechselbar sowohl am Tragelement als auch an der Tragkonstruktion anordbar. Zu Reinigungszwecken kann so das Tragelement vom Verbindungselement als auch das Verbindungselement von der Tragkonstruktion getrennt werden. Um eine ungewünschte Verdrehbewegung des Tragelements gegenüber der Tragkonstruktion zu verhindern, ist das Tragelement verdrehsicher an der Tragkonstruktion anordbar, zu welchem Zweck das Verbindungselement sowohl am Tragelement als auch an der Tragkonstruktion verdrehsicher anordbar ist.

Vorzugsweise ist das Verbindungselement nach Art eines Stopfens ausgebildet. Er besteht aus Kunststoff, vorzugsweise einem thermoplastischen Kunststoff. Eine derartige Ausgestaltung hat den Vorteil, daß das Verbindungselement abdichtend in eine korrespondierende Aufnahme der Tragkonstruktion eingesteckt werden kann. Zudem kann das Verbindungselement aufgrund der Materialelastizität des thermoplastischen Kunststoffes ohne weitere Befestigungsmittel, wie beispielsweise Gewinde oder dergleichen, lagesicher in die korrespondierend an der Tragkonstruktion ausgebildete Aufnahme eingesteckt werden. Ohne die Hinzunahme eines Werkzeuges kann das Verbindungselement somit von der Tragkonstruktion gelöst bzw. an diese angeordnet werden. Darüber hinaus ist das Verbindungselement auch bei unter Umständen auftretenden Erschütterungen geräuschgedämmt an der Tragkonstruktion angeordnet.

Vorgeschlagen wird desweiteren ein Bett, insbesondere ein Kranken- und/oder Pflegebett, aufweisend eine als Tragkonstruktion im vorgenannten Sinne ausgebildete Liegefläche, welche Liegefläche mit Tragelementen der vorgenannten Art bestückt ist und welche Trageelemente mit Aufnahmeelementen der erfindungsgemäßen Art versehen sind.

Verbinderseitig wird mit der Erfindung vorgeschlagen, ein Verbinder für die Anordnung eines Funktionselements an einer Basis, mit einem stopfenförmigen Abschnitt, welcher in eine an der Basis ausgebildete Ausnehmung einsteckbar ist, zu welchem Zweck der stopfenförmige Abschnitt korrespondierend zur Ausnehmung der Basis ausgebildet ist, wobei der stopfenförmige Abschnitt seinerseits eine Ausnehmung zur Aufnahme eines am Funktionselement angeordneten Verbindungselementes aufweist.

Funktionselemente in diesem Sinne sind Federelemente, wie sie als federelastische Unterlage für Sitz- und Liegeflächen von Möbeln eingesetzt werden.

Zur Anordnung derartiger Funktionselemente an einer Basis können Befestigungsmittel, wie beispielsweise Schrauben, Nieten oder dergleichen eingesetzt werden. Derlei Befestigungsmittel sind aus dem Stand der Technik wohl bekannt, weisen jedoch den Nachteil auf, daß eine Montage bzw. Demontage der Funktionselemente vergleichsweise aufwendig ist. Zudem können die Funktionselemente - beispielsweise bei der Verwendung von Nieten - von der Basis nicht ohne weiteres wieder gelöst werden. Um diesen Nachteil zu umgehen, ist der Einsatz von gewindetragenden Befestigungsmitteln, wie z. B. Schrauben oder Gewindestiften bekannt. Der Einsatz solcher Befestigungsmittel setzt jedoch die Ausbildung entsprechender Gegengewinde voraus, was zum einen nicht zuletzt aus Kostengründen aufwendiger ist, zum anderen bedarf es einer vergleichsweise zeitintensiven Montage, die entweder herstellerseitig oder anwenderseitig durchzuführen ist.

Der erfindungsgemäße Verbinder ist als Steckteil ausgebildet und kann als Koppelelement oder Verbindungselement bezeichnet werden, das bei einer bestimmungsgemäßen Verwendung das Funktionselement mit der Basis verbindet. Der Verbinder weist einen stopfenförmigen Abschnitt auf, welcher zwecks Anordnung eines Funktionselements an einer Basis in eine an der Basis ausgebildete Ausnehmung einsteckbar ist. Für eine lagesichere Anordnung ist der stopfenförmige Abschnitt korrespondierend zur Ausnehmung der Basis ausgebildet. So kann beispielsweise vorgesehen sein, daß der stopfenförmige Abschnitt einen im wesentlichen kreisförmigen Querschnitt aufweist. Die an der Basis ausgebildete Ausnehmung weist dementsprechend gleichfalls einen im wesentlichen kreisförmigen Querschnitt auf und ist beispielsweise als Bohrung ausgebildet. In diese Bohrung wird der stopfenförmige Abschnitt des Verbinders zwecks Anordnung eines Funktionselements eingesteckt. Um eine verdrehsichere Anordnung des stopfenförmigen Abschnitts zu gewährleisten, können die an der Basis ausgebildete Ausnehmung und der stopfenförmige Abschnitt jeweils einen von der Kreisform abweichenden Querschnitt aufweisen, und beispielsweise eckförmig ausgebildet sein.

Der stopfenförmige Abschnitt verfügt seinerseits über eine Ausnehmung, welche dazu dient, ein am Funktionselement angeordnetes Verbindungselement aufzunehmen. In seiner einfachsten Ausgestaltungsform verfügt der stopfenförmige Abschnitt über eine im wesentlichen kreisförmige Ausnehmung, in die das Verbindungselement des Funktionselements, welches beispielsweise als stiftförmiger Fortsatz ausgebildet ist, eingesteckt werden kann. Um eine verdrehsichere Anordnung des Funktionselements gegenüber dem Verbinder sicherzustellen, können die Querschnitte von Verbindungselement einerseits und der in dem stopfenförmigen Abschnitt ausgebildeten Ausnehmung andererseits eine von der Kreisform abweichende Ausgestaltung aufweisen, und beispielsweise ellipsen- oder eckförmig ausgebildet sein.

Die Anordnung eines Funktionselementes an einer Basis kann unter Verwendung des erfindungsgemäßen Verbinders auf denkbar einfache Weise durchgeführt werden. In einem ersten Schritt ist der Verbinder in die an der Basis ausgebildete Ausnehmung einzustecken. Alsdann ist in einem zweiten Schritt das Verbindungselement des Funktionselements in die Ausnehmung des stopfenförmigen Abschnitts des Verbinders einzuführen. Im Ergebnis ist das Funktionselement an der Basis bestimmungsgemäß angeordnet. Die auf diese Weise ausgebildete Verbindung zwischen Funktionselement und Basis kann im Bedarfsfall auf einfache Weise wieder gelöst werden, denn ist es lediglich erforderlich, das Funktionselement aus dem Verbinder und den Verbinder aus der in der Basis ausgebildeten Ausnehmung herauszuziehen. Eine solche Demontage erfolgt zerstörungsfrei, so daß sowohl der Verbinder als auch das Funktionselement für eine weitere Verwendung eingesetzt werden können. Was die Montage angeht, so versteht sich von selbst, daß gemäß einer alternativen Vorgehensweise zunächst der Verbinder am Funktionselement angeordnet werden kann, so daß in einem zweiten Montageschritt der Verbinder samt daran bereits angeordnetem Funktionselement in die an der Basis ausgebildete Ausnehmung eingesteckt wird.

Der erfindungsgemäße Verbinder erlaubt eine einfache Handhabung, denn bedarf es keiner aufwendigen Montage- bzw. Demontagearbeiten, da Basis und Verbinder einerseits sowie Verbinder und Funktionselement andererseits lediglich miteinander versteckt werden. Die mittels des Verbinders ausgebildete Verbindung zwischen Funktionselement und Basis ist bei entsprechender Ausgestaltung verdrehsicher, ermöglicht eine sichere Anordnung des Funktionselementes an der Basis und kann im Bedarfsfall zerstörungsfrei gelöst werden.

Gemäß einem besonderen Merkmal der Erfindung ist der stopfenförmige Abschnitt des Verbinders aus einem elastischen Material, beispielsweise Kunststoff gebildet. Als Kunststoff eignet sich insbesondere ein spritzgußfähiges Kunststoffmaterial, was in besonderer Weise eine einfache Herstellung des Verbinders ermöglicht. Um eine sichere Anordnung des Funktionselementes an der Basis zu unterstützen, kann der stopfenförmige Abschnitt des Verbinders hinsichtlich seines Querschnitts ein leichtes Übermaß gegenüber der an der Basis ausgebildeten Ausnehmung aufweisen. Bedingt durch ein solches Übermaß ist der Verbinder zwecks Montage in die an der Basis ausgebildete Ausnehmung einzudrücken bzw. einzupressen, wobei das Übermaß derart ausgebildet sein sollte, daß ein Eindrücken bzw. Einpressen ohne die Zuhilfenahme von Werkzeug durch einfachen Fingerdruck erreicht werden kann. Von besonderem Vorteil bei dieser Ausgestaltungsform ist, daß der Verbinder infolge seines Eindrückens bzw. Einpressens in die an der Basis ausgebildete Ausnehmung lagesicher gegenüber der Basis fixiert wird.

Von Vorteil des Verbinders gegenüber herkömmlichen Befestigungsmitteln ist zudem, daß dieser schalldämmend wirkt. Funktionselement und Basis stehen nämlich nicht direkt miteinander in Kontakt. Etwaige geräuschinduzierende Erschütterungen entweder der Basis oder des Funktionselementes können über den zwischen Funktionselement und Basis zwischengeordneten Verbinder absorbiert werden, insbesondere dann, wenn der Verbinder aus Kunststoff gebildet ist. Unter Umständen störende Kontaktgeräusche zwischen Funktionselement und Basis können mithin vermieden werden.

Von Vorteil ist des weiteren, daß der Verbinder eine flüssigkeitsdichte Verbindung zwischen Funktionselement einerseits und Basis andererseits ausbildet. Von Vorteil ist diese Eigenschaft des Verbinders insbesondere dann, wenn eine Verwendung von Funktionselement und Basis in einem flüssigkeitssensiblen Bereich vorgesehen ist. Als Beispiel sei die Ausbildung des Funktionselementes als Federelement genannt, welches zur Abstützung der Liegefläche eines Bettes, beispielsweise einer Matratze, auf einer als Tragkonstruktion für die Matratze ausgebildeten Basis angeordnet ist.

Zur Unterstützung der Dichtfunktion des erfindungsgemäßen Verbinders kann dieser gemäß einem weiteren Merkmal der Erfindung einen Kragen aufweisen, der am stopfenförmigen Abschnitt des Verbinders angeordnet ist und der im montierten Zustand des Verbinders auf der Oberseite der Basis anliegt. Dieser Kragen weist gemäß einem besonderen Vorteil der Erfindung eine Dichtlippe auf, so daß ein flüssigkeitsdichtes Anliegen des Kragens an der Basis gewährleistet ist. Zudem kann vorgesehen sein, daß der Kragen auf seiner der Basis zugewandten Unterseite Dichtlamellen aufweist, die gleichfalls dem flüssigkeitsdichten Anliegen des Verbinders an der Basis dienen.

Gemäß einem weiteren Merkmal der Erfindung weist der stopfenförmige Abschnitt einendseitig ein Rastmittel auf, das im montierten Zustand des Verbinders an der Unterseite der Basis anliegt. Ausgebildet sein kann das Rastmittel als umlaufende Wulst, die einendseitig am stopfenförmigen Abschnitt angeordnet ist, wobei der stopfenförmige Abschnitt und die umlaufende Wulst einstückig ausgebildet sind. Nach einer Montage hintergreift die als Rastmittel ausgebildete umlaufende Wulst die unterseitige Oberfläche der Basis, wodurch ein unbeabsichtigtes Herauslösen des Verbinders aus der in der Basis ausgebildeten Ausnehmung heraus unterbunden ist. Zwecks Demontage ist das das Rastmittel tragende Ende des stopfenförmigen Abschnittes zusammenzudrücken, so daß es durch die in der Basis ausgebildete Ausnehmung herausgeführt werden kann. Die Dicke der umlaufenden Wulst sowie die Materialeigenschaften des Verbinders sind dabei derart aufeinander abgestimmt, daß ein solches Zusammendrücken des stopfenförmigen Abschnittes von Hand, d. h. ohne Einsatz etwaiger Werkzeuge, vollzogen werden kann.

In seiner einfachsten Ausgestaltungsform besteht der erfindungsgemäße Verbinder allein aus einem stopfenförmigen Abschnitt. Dieser stopfenförmige Abschnitt besteht aus einem elastischen Material, vorzugsweise Kunststoff, und wird zwecks Anordnung des Funktionselementes an der Basis in eine korrespondierend an der Basis ausgebildete Ausnehmung eingeführt. Der stopfenförmige Abschnitt kann gemäß einer weiteren Ausführungsform einendseitig ein Rastmittel aufweisen, welches im montierten Zustand des Verbinders an der Unterseite der Basis anliegt und ein ungewolltes Herausziehen des Verbinders aus der in der Basis ausgebildeten Ausnehmung verhindert.

Des weiteren kann vorgesehen sein, daß der stopfenförmige Abschnitt anderendseitig einen Kragen trägt, der im montierten Zustand des Verbinders an der Oberseite der Basis anliegt. Dieser Kragen kann sowohl eine Dichtlippe als auch Dichtlamellen aufweisen. Stopfenförmiger Abschnitt, Kragen und Rastmittel sind vorzugsweise einstückig ausgebildet und bestehen aus einem elastischen Material, wie vorstehend beschrieben.

Gemäß einem weiteren Merkmal der Erfindung weist der stopfenförmige Abschnitt außenumfangsseitig radial nach außen gerichtete Verstärkungsrippen auf. Diese Verstärkungsrippen sind in dreierlei Hinsicht von Vorteil. Zunächst einmal verstärken sie den stopfenförmigen Abschnitt sowohl hinsichtlich seiner Biegesteifigkeit als auch hinsichtlich seiner Torsionssteifigkeit. Ferner dienen sie der verdrehsicheren Anordnung des stopfenförmigen Abschnittes in der an der Basis ausgebildeten Ausnehmung, die hinsichtlich Ihres Querschnittes korrespondierend zu dem die Verstärkungsrippen tragenden stopfenförmigen Abschnitt ausgebildet ist. Zudem können die im stopfenförmigen Abschnitt ausgebildete Ausnehmung zur Aufnahme des Verbindungselements des Funktionselements und die Verstärkungsrippen derart aufeinander abgestimmt sein, daß bei einem Einführen des Verbindungselements in die Ausnehmung des stopfenförmigen Abschnitts die Verstärkungsrippen auseinandergedrückt werden, wodurch sich ein besonders sicherer Halt des Verbinders in der Ausnehmung der Basis einstellt.

Gemäß einem weiteren Merkmal der Erfindung ist vorgesehen, daß der stopfenförmige Abschnitt einendseitig eine innenumfangsseitig ausgebildete Nut aufweist, in die im montierten Zustand des Verbinders eine am Verbindungselement des Funktionselementes ausgebildete Hinterschneidung eingreift. Erreicht wird durch diese Ausgestaltung eine lagesichere Anordnung des Funktionselementes gegenüber dem Verbinder, denn ist ein unbeabsichtigtes Lösen von Verbinder und Funktionselement unterbunden. Das am stopfenförmigen Abschnitt des Verbinders angeordnete Rastmittel sorgt mithin dafür, daß der Verbinder nicht ungewollt von der Basis entfernt werden kann, wohingegen das Zusammenwirken von verbinderseitiger Nut und funktionselementseitiger Hinterschneidung dafür Sorge trägt, daß das Funktionselement nicht ungewollt vom Verbinder gelöst werden kann. Im Ergebnis schafft diese Konstruktion eine Anordnung zwischen Basis und Funktionselement, die bei einer bestimmungsgemäßen Verwendung des Verbinders dafür sorgt, daß das Funktionselement positionsgenau und sicher an der Basis angeordnet ist, wobei Funktionselement und Basis nicht ungewollt voneinander getrennt werden können. Dabei kann in Ergänzung des vorbeschriebenen Aufbaus vorgesehen sein, daß der stopfenförmige Abschnitt des Verbinders innen wie außen konisch ausgebildet ist.

Der erfindungsgemäße Verbinder kann als Spritzgußteil ausgebildet sein, was seine Herstellung einfach und kostengünstig macht. Er ist in vorteilhafter Weise einfach verwendbar und erlaubt die Ausbildung einer zuverlässigen Verbindung zwischen Funktionselement einerseits und Basis andererseits. Er kann auf einfache Weise montiert bzw. demontiert werden, wobei eine Demontage zerstörungsfrei erfolgt, weshalb der Verbinder mehrfach verwendbar ist. Die Montage bzw. Demontage des Verbinders kann ohne den Einsatz etwaiger Werkzeuge erfolgen, weshalb sie schnell und auf einfache Weise durchgeführt werden kann. Zudem ist von Vorteil, daß der erfindungsgemäße Verbinder geräuschabsorbierend, das heißt geräuschdämmend wirkt. Zudem dichtet er die Verbindungsstelle zwischen Funktionselement und Basis ab, was insbesondere beim Einsatz des Verbinders in flüssigkeitssensiblen Bereichen von Vorteil ist. Der erfindungsgemäße Verbinder ist damit universell einsetzbar, was eine anwenderindividuelle Verwendung ermöglicht.

Vorgeschlagen wird des weiteren eine Einrichtung zur Polsteraufnahme für die Unterpolsterung von Sitz- oder Liegemöbeln, mit einer Vielzahl von benachbart angeordneten Auflagerelementen, wobei ein jedes Auflagerelement ein Federelement und eine daran angeordnete Polsteraufnahme aufweist, wobei das Federelement mehrzügig ausgebildet ist und wenigstens zwei spiral- und/oder wendelförmig ausgebildete Federarme aufweist und wobei das Federelement aus Kunststoff besteht.

Die Einrichtung verfügt über eine Vielzahl von Auflagerelementen die zueinander benachbart angeordnet sind und beispielsweise von einem Traggestell, einer Tragplatte, einer Lattenanordnung oder dergleichen getragen werden. Die Auflagerelemente ihrerseits stützen ein hierauf angeordnetes Polster federelastisch ab. Hierdurch wird ein besonders guter Sitz- und/oder Liegekomfort erreicht. Dabei können die Auflagerelemente für sämtliche Polster eines Sitz- und/oder Liegemöbels Verwendung finden.

Ein jedes Auflagerelement der Einrichtung weist einerseits ein Federelement und andererseits eine daran angeordnete Polsteraufnahme auf. Das Federelement seinerseits ist mehrzügig ausgebildet und verfügt wenigstens über zwei spiral- und/oder wendelförmig ausgebildete Federarme. Das gesamte Federelement ist als Spritzgußteil ausgebildet und besteht aus Kunststoff, wobei die Federarme des Federelements derart zusammenwirken, daß sie bei einer Kraftbeaufschlagung federnd nachgeben, wobei die Federwirkung der Federarme durch geeignete Geometrie- und/oder Materialwahl vorgebbar ist.

Dies ermöglicht in vorteilhafter Weise eine vielseitige Einsetzbarkeit der Auflagerelemente, die nach Größe, Anzahl, Federungskomfort und dergleichen wahlweise miteinander zur erfindungsgemäßen Einrichtung kombiniert werden können.

Gegenüber herkömmlichen, aus Federstahl gebildeten Federelementen weisen die nach der Erfindung aus Kunststoff bestehenden Federelemente den Vorteil auf, daß sie gewichtsoptimiert ausgebildet, leicht zu handhaben und hinsichtlich Herstellung und Montage kostengünstig sind. Zudem läßt sich das Federelement insbesondere bei einer wendelförmigen Ausgestaltung desselben auf "0" zusammendrücken, d. h. es kann in Höhenrichtung bis auf Anschlag zusammengedrückt werden, womit ein im Bezug auf die Längserstreckung des Federelements in Höhenrichtung außerordentlich langer Federweg zur Verfügung gestellt wird.

Das Federelement ist mehrzügig ausgebildet, d. h. es verfügt über wenigstens zwei Federarme. Der Vorteil dieser Ausgestaltung ist insbesondere darin zu sehen, daß die bei einer bestimmungsgemäßen Verwendung der erfindungsgemäßen Einrichtung aufzunehmenden Kräfte gleichförmig von den Federarmen aufgenommen werden können. Dabei erlaubt die Ausbildung der Federarme sowohl eine Biege- als auch eine Torsionsbeanspruchung. Die Ausgestaltung von mehr als zwei Federarmen, d. h. beispielsweise die Ausgestaltung von drei, vier oder mehr Federarmen liegt im Rahmen der Erfindung.

Ein jedes Auflagerelement der Einrichtung verfügt über eine Polsteraufnahme, beispielsweise in Form eines als Kopfplatte dienendes Aufnahmeelement. Diese Polsteraufnahme ist am Federelement des jeweiligen Auflagerelementes angeordnet. Ebenso wie das Federelement besteht auch die Polsteraufnahme aus Kunststoff und ist vorzugsweise als Spritzgußteil ausgebildet.

Die Polsteraufnahme kann beispielsweise nach Art einer Kopfplatte plattenförmig ausgebildet sein und gegebenenfalls Durchbrüche in Form von Bohrungen oder Langlöchern aufweisen. Die nach Art einer Kopfplatte ausgebildete Polsteraufnahme kann gemäß einem weiteren Merkmal der Erfindung ringförmig ausgebildet sein, wobei sowohl kreisförmige als auch mehreckförmige Ringausgestaltungen denkbar sind. Die mehreckige Ausgestaltung der ringförmigen Polsteraufnahme ist dabei bevorzugt, insbesondere die fünf- und/oder sechseckige Ausgestaltung.

Mit der Einrichtung gehen im wesentlichen zwei Vorteile einher. Zum einen wird durch die federelastischen Eigenschaften der Federelemente ein deutlich verbesserter Sitz-und/oder Liegekomfort geschaffen. Zum anderen ist eine Hinterlüftung der auf der erfindungsgemäßen Einrichtung abgelegten Polster möglich. Auch hierdurch wird der Sitz-und/oder Liegekomfort verbessert, denn unterbleibt in vorteilhafter Weise ein "Festkleben" am Polstermaterial durch Schweißbildung. Darüber hinaus erweist sich die erfindungsgemäße Einrichtung als überaus pflegeleicht, denn können die einzelnen aus Kunststoff bestehenden Auflagerelemente, d. h. die Federelemente und die Polsteraufnahmem unter Verwendung herkömmlicher Reinigungs- und Pflegemittel auf einfache Weise gereinigt werden. Die erfindungsgemäße Einrichtung läßt sich daher nicht nur für in Haus, sondern auch für außer Haus Möbel, wie zum Beispiel Garten- und Campingmöbel oder dergleichen einsetzen.

Es ist vorgesehen, daß die Einrichtung zur Polsteraufnahme für die Unterpolsterung von Sitz- und/oder Liegemöbeln eine Vielzahl von benachbart angeordneten Auflagerelementen aufweist. Dabei bestimmt sich die Anzahl der einzusetzenden Auflagerelementen nach der Größe der wunschgemäß auszubildenden Sitz-, Rücken-, Arm- oder Beinfläche. Die Auflagerelemente können reihenförmig oder versetzt zueinander in Längs- und/oder Querreihen angeordnet sein. Der Phantasie sind keine Grenzen gesetzt, denn kommt es erfindungsgemäß allein darauf an, daß eine Mehrzahl von benachbart angeordneten Auflagerelementen eine erfindungsgemäße Einrichtung zur Polsteraufnahme ausbildet. Der besseren Handhabung wegen können die einzelnen Auflagerelemente der Einrichtung aneinander gekoppelt sein, wodurch sich eine mattenartige Ausgestaltung ergibt.

In einer bevorzugten Ausgestaltungsform sind die Polsteraufnahmen der Auflagerelemente ringförmig ausgebildet und weisen eine mehreckige, vorzugsweise sechseckige Außenkontur auf. Diese Ausgestaltung hat den Vorteil, daß die benachbart angeordneten Auflagerelemente der erfindungsgemäßen Einrichtung in Längs- und/oder Querrichtung versetzt zueinander angeordnet sind, was einerseits einer auf mehrere Auflagerelemente aufgeteilte Krafteinleitung dient und andererseits unnötige Lücken oder Freiräume zwischen einzelnen Auflagerelementen vermeiden hilft.

Gemäß einer ersten Alternative ist ein jedes Auflagerelement der Einrichtung einstückig ausgebildet, d. h. das Federelement und die Polsteraufnahme des Auflagerelementes bilden einen einstückig ausgebildeten Auflagerkörper. Alternativ zu dieser Ausgestaltungsform kann vorgesehen sein, daß sowohl das Federelement als auch die Polsteraufnahme eines Auflagerelementes als jeweils einstückige Bauelemente ausgebildet sind. Diese werden zur endfertigen Verwendung eines Auflagerelementes wahlweise miteinander kombiniert, wobei die Polsteraufnahme vorzugsweise auswechselbar am Federelement angeordnet ist. Diese Art der Ausgestaltung bietet den Vorteil, daß die Polsteraufnahme und das Federelement aus unterschiedlichen Kunststoffen gebildet sein können. Zur lagersicheren Fixierung der Polsteraufnahme am zugehörigen Federelement tragen sowohl das Federelement als auch die Polsteraufnahme korrespondierend zueinander ausgebildete Verbindungsmittel. In diesem Zusammenhang kann beispielsweise als Verbindungsmittel ein an der Polsteraufnahme federelelementseitig angeordneter Stift vorgesehen sein, der in eine korrespondierende und am Federelement ausgebildete Bohrung eingreift. Um ein unbeabsichtigtes Trennen von Federelement einerseits und Polsteraufnahme andererseits unterbinden zu können, sind zudem Rastmittel vorgesehen sein, die die Verbindung zwischen Federelement und Polsteraufnahme sichern.

Gemäß einem weiteren Merkmal ist vorgesehen, daß die Federarme des Federelements ausgehend von einem Basisabschnitt eine Wendelung von mehr 180°, vorzugsweise von mehr als 270° aufweisen. Wie vorstehend bereits beschrieben, hat die wendelförmige Ausgestaltung der Federarme den Vorteil, daß das Federelement auf "0" zusammengedrückt werden kann. Je nach gewünschtem Federweg sind die Federarme entsprechend lang auszubilden, so daß in Abhängigkeit der gewählten Steigung mehrere Wendelungen vorgesehen sein können. Bevorzugt ist die Ausbildung nur einer Wendelung, in welchem Fall der Federarm ausgehend vom Basisabschnitt eine Wendelung von 360° aufweist.

Gemäß einem weiteren Merkmal weist der Basisschnitt eines jeden Federelements auf der den Federarmen abgewandten Unterseite des Federelements ein Mittel zur Anordnung des Federelements an einem Gegenstück auf. Ein solches Gegenstück kann beispielsweise ein Traggerüst, eine Tragplatte, ein Tragrahmen, eine Lattenanordnung und dergleichen sein. Bevorzugterweise ist das Mittel zur Anordnung an einem Gegenstück ein stiftartiger Formsatz, der verdrehsicher innerhalb einer Bohrung am Gegenstück einsetzbar ist. Zwecks verdrehsicherer Anordnung kann vorgesehen sein, daß der Fortsatz einen von der Kreisform abweichenden Querschnitt aufweist.

Die vorzugsweise ringförmig ausgebildete Polsteraufnahme kann gemäß einem weiteren Merkmal der Erfindung einen Außendurchmesser von D_{A} = 2 cm bis 8 cm aufweisen. Bevorzugt ist die Ausgestaltung eines Außendurchmessers von D_{A} = 3 cm bis 7 cm und noch mehr bevorzugt von D_{A} = 4 cm bis 6 cm. Je nach gewünschten Maximalfederweg kann das Federelement in Höhenrichtung eine Längserstreckung von L_{H} = 1 cm bis 5 cm, vorzugsweise L_{H} = 2 cm bis 4 cm aufweisen. Diese beispielhaft genannten Zahlenwerte sind für die Erfindung allerdings nicht einschränkend, denn kommt es erfindungsgemäß allein darauf an, daß eine Mehrzahl von wahlweise miteinander kombinierbaren Auflagerelementen die erfindungsgemäßen Einrichtung bilden.

Weitere Merkmale und Vorteile der Erfindung ergeben sich aus der Beschreibung anhand der Figuren. Dabei zeigen:
- Fig. 1: in einer dreidimensionalen Ansicht das erfindungsgemäße Auflagerelement;
- Fig. 2: in einer Draufsicht von oben das erfindungsgemäße Auflagerelement;
- Fig. 3: die Einzelbauteile des erfindungsgemäßen Auflagerelements;
- Fig. 4: ein an einer Trägerplatte angeordnetes Verbindungselement;
- Fig. 5: in einer Seitenansicht ein an einer Trägerplatte angeordnetes erfindungsgemäßes Auflagerelement;
- Fig. 6: in einer perspektivischen Darstellung ein an einer Trägerplatte angeordnetes erfindungsgemäßes Auflagerelement;
- Fig. 7: ein Federelement in einer ersten Seitenansicht;
- Fig. 8: ein Federelement in einer zweiten Seitenansicht;
- Fig. 9: ein Federelement in einer Draufsicht von oben;
- Fig. 10: einen Teilausschnitt des Federelements gemäß Schnittlinie nach Fig. 9;
- Fig. 11: ein Federelement in einer geschnittenen Seitenansicht;
- Fig. 12: ein Federmodul gemäß einer ersten Ausführungsform;
- Fig. 13: ein Federmodul gemäß einer zweiten Ausführungsform;
- Fig. 14: in einer Draufsicht von oben ein Aufnahmeelement;
- Fig. 15: in einer Draufsicht von unten ein Aufnahmeelement;
- Fig. 16: in einer schematischen Perspektivdarstellung die Einzelbauteile eines ein Aufnahmeelement umfassendes Auflagerelement;
- Fig. 17: in einer Seitenansicht ein an einer Tragkonstruktion angeordnetes Auflagerelement, beinhaltend ein Aufnahmeelement;
- Fig. 18: in einer perspektivischen Darstellung die Anordnung eines ein Aufnahmeelement umfassendes Auflagerelement an einer Tragkonstruktion gemäß Fig. 17;
- Fig. 19: in einer schematischen Seitenansicht ein als Liegefläche eines Bettes ausgebildetes und mehrere Aufnahmeelemente aufnehmende Tragkonstruktion;
- Fig. 20: eine schematische Ausschnittsdarstellung in Draufsicht von oben gemäß Fig. 19;
- Fig. 21: den erfindungsgemäßen Verbinder in einer schematischen Perspektivdarstellung;
- Fig. 22: den erfindungsgemäßen Verbinder in einer ersten Seitendarstellung;
- Fig. 23: den erfindungsgemäßen Verbinder in einer zweiten Seitendarstellung;
- Fig. 24: den erfindungsgemäßen Verbinder in einer Draufsicht von oben;
- Fig. 25: den erfindungsgemäßen Verbinder in einer ersten Schnittdarstellung gemäß Schnitt XXV-XXV;
- Fig. 26: den erfindungsgemäßen Verbinder in einer zweiten Schnittdarstellung gemäß Schnitt XXVI-XXVI;
- Fig. 27: eine Ausschnittsdarstellung gemäß Fig. 26;
- Fig. 28: in einer geschnittenen Seitendarstellung die Anordnung eines Funktionselementes an einer Basis unter Verwendung des erfindungsgemäßen Verbinders;
- Fig. 29: eine Ausschnittsdarstellung gemäß Fig. 28;
- Fig. 30: in einer schematischen Draufsicht von oben eine Einrichtung in einer ersten Ausgestaltungsform;
- Fig. 31: in einer schematischen Draufsicht von oben eine Einrichtung in einer zweiten Ausgestaltungsform;
- Fig. 32: in einer perspektivischen Darstellung ein Auflagerelement der Einrichtung in einer ersten Ausführungsform;
- Fig. 33: in einer perspektivischen Darstellung ein Auflagerelement der Einrichtung in einer zweiten Ausführungsform;
- Fig. 34: in einer Draufsicht von oben ein Auflagerelement der Einrichtung in einer dritten Ausführungsform;
- Fig. 35: das Auflagerelement nach Fig. 34 in einer Seitendarstellung;
- Fig. 36: das Auflagerelement nach Fig. 34 in einer perspektivischen Darstellung;
- Fig. 37: das Auflagerelement nach Fig. 36 in einer Explosionsdarstellung in einer Ansicht von unten;
- Fig. 38: die Polsteraufnahme des Auflagerelementes nach Fig. 34 in einer perspektivischen Darstellung von unten;
- Fig. 39: in einer perspektivischen Darstellung ein Auflagerelement der Einrichtung in einer vierten Ausführungsform;
- Fig. 40: das Auflagerelement nach Fig. 39 in einer Explosionsdarstellung von unten;
- Fig. 41: in einer schematischen Seitenschnittdarstellung die Verwendung der Einrichtung anhand des Beispiels eines Bürostuhls und
- Fig. 42: in einer Draufsicht von oben die Anordnung der Auflagerelemente der Einrichtung in einer ersten Ausführungsform.

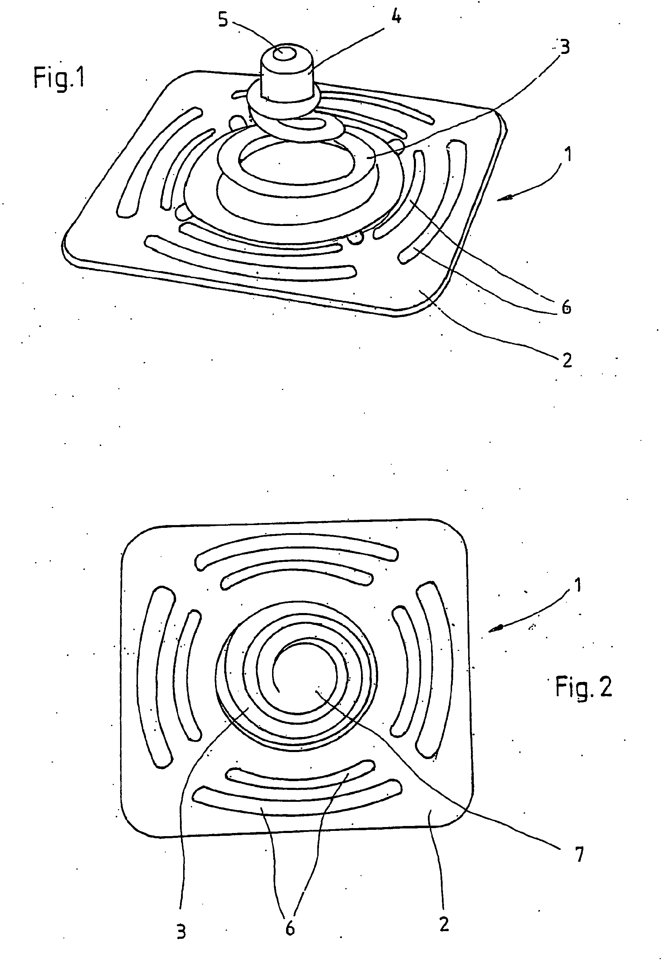

Fig. 1 zeigt in einer perspektivischen Darstellung das Auflagerelement 1 in einer Ansicht von unten. Gebildet ist das Auflagerelement aus einer mit Durchbrüchen 6 versehenen Kopfplatte 2, einem an der Kopfplatte 2 angeordneten Federelement 3 sowie einem Verbindungselement 4, das der Kopfplatte 2 gegenüberliegend am Federelement 3 angeordnet ist.

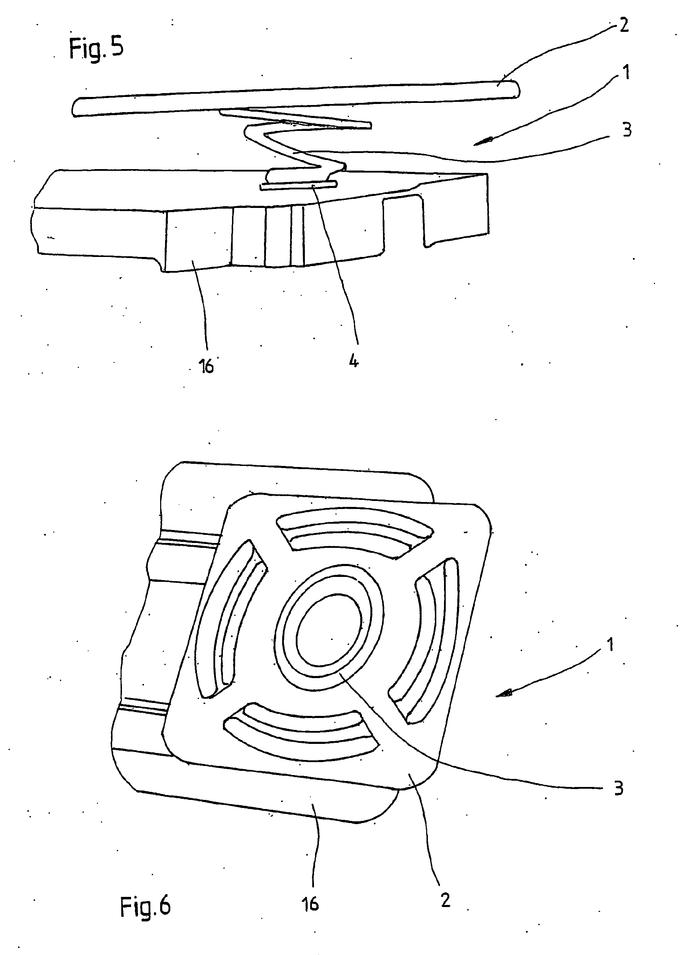

Erfindungsgemäß ist das Federelement 3 wendelförmig ausgebildet. Es erstreckt sich zwischen Kopfplatte 2 des Auflagerelements 1 einerseits und einer das Auflagerelement 1 aufnehmenden Trägerplatte 16 andererseits, wie insbesondere den Fign. 5 und 6 entnommen werden kann. Dabei ist das Federelement 3, wie insbesondere Fig. 5 zeigt, ausgehend von der Kopfplatte 2 in Richtung der Trägerplatte 16 nach Art eines Kegels in seiner Querschnittsfläche verjüngt ausgebildet. Im Bereich der Kopfplatte weist das Federelement vorzugsweise einen Durchmesser von 50 mm bis 60 mm auf.

Fig. 2 zeigt das erfindungsgemäße Auflagerelement in einer Draufsicht von oben. Deutlich zu erkennen sind hier die in der Kopfplatte 2 ausgebildeten Durchbrüche 6, die insbesondere der Be- und Entlüftung der im betriebsfertigen Zustand auf einem Auflagerelement 1 aufgelegten Auflage, beispielsweise einer Matratze, dienen.

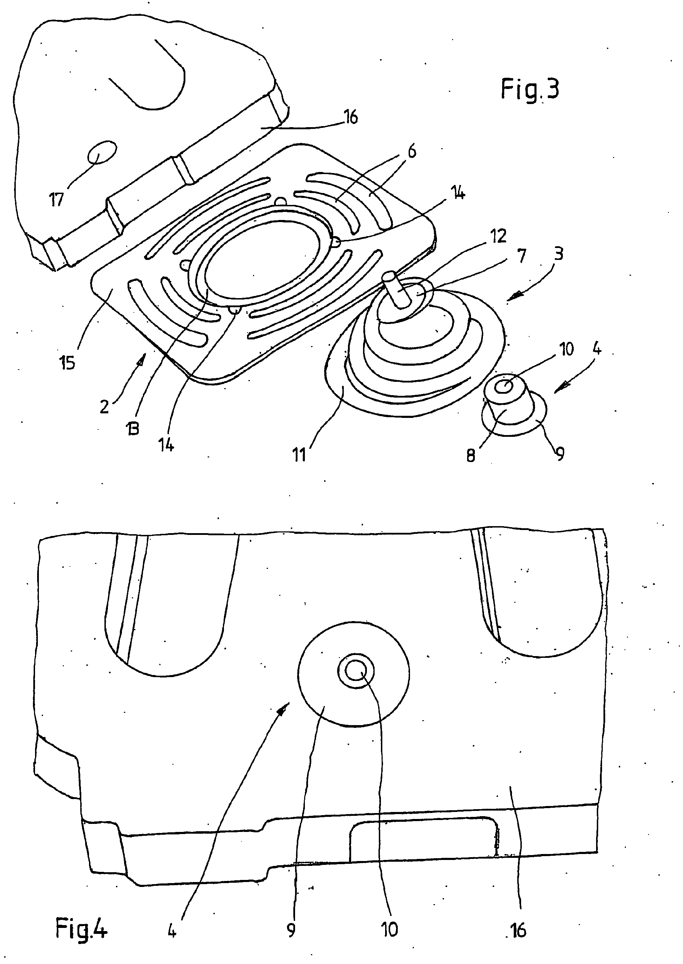

Die einzelnen Baubestandteile des erfindungsgemäßen Auflagerelements 1 sind in Fig. 3 dargestellt. Zu erkennen sind hier die Kopfplatte 2, das Federelement 3 sowie das Verbindungselement 4.

Das Verbindungselement 4 ist nach Art eines Stopfens ausgebildet und weist einen Grundkörper 8 sowie einen daran angeordneten, umlaufenden Rand 9 auf. Zur auswechselbaren Anordnung des Auflagerelements 1 an einer Trägerplatte 16 kann das Verbindungselement 4 auswechselbar in eine korrespondierend in der Trägerplatte 16 ausgebildete Aufnahme 17 eingesteckt werden. Dabei dient der Rand 9 des Verbindungselements 4, wie insbesondere Fig. 4 entnommen werden kann, der Abstützung des Verbindungselements 4 gegenüber der Trägerplatte 16.

Das Verbindungselement 4 verfügt des weiteren über eine Bohrung 10, in die hinein das kopfplattenfeme Ende des Federelements 3 vorzugweise austauschbar eingeführt werden kann. Um eine verdrehsichere Anordnung des Auflagerelements 1 gegenüber der Trägerplatte 16 sicherzustellen, ist sowohl das Verbindungselement 4 am Federelement 3 als auch an der Trägerplatte 16 verdrehsicher angeordnet.

Das Federelement 3 besteht aus einem wendelförmig ausgebildeten Federkörper 11, einem Basisteil 7 sowie einem am Basisteil 7 angeordneten Stift 12, der korrespondierend zur Bohrung 10 des Verbindungselementes ausgebildet ist. Im montierten Zustand stützt sich das Basisteil 7 des Federelements 3 auf dem Verbindungselement 4 ab, wie insbesondere Fig. 5 entnommen werden kann.

Die Kopfplatte 2 besteht aus einem vorzugsweise als Spritzgußteil ausgebildeten Formelement 15. Auf der der Auflage abgewandten Seite des Formelements 15 ist zur verdrehsicheren Anordnung des Federelements 3 an der Kopfplatte 2 eine Aufnahme 13 vorgesehen. Die Aufnahme 13 ist in ihrer Größe derart bemessen, daß sie den letzten Wendelgang des Federkörpers 11 des Federelements 3 vollständig aufnimmt. Auf diese Weise kann eine gleichförmige Krafteinleitung über die Kopfplatte 2 in das Federelement 3 sichergestellt werden. Zur Festlegung des Federelements 3 gegenüber der Kopfplatte 2 kann die Aufnahme 13 über Verbindungseinrichtungen 14 verfügen. Dabei sind die Verbindungseinrichtungen vorzugsweise derart ausgebildet, daß eine auswechselbare Anordnung von Kopfplatte 2 einerseits und Federelement 3 andererseits möglich ist. Beispielsweise können die Verbindungseinrichtungen als Rast- oder Clipeinrichtungen ausgebildet sein.

Wie schon vorstehend beschrieben, ist in Fig. 4 die Anordnung eines Verbindungselements 4 in einer Trägerplatte 16 dargestellt. Deutlich zu erkennen in Fig. 4 ist der auf der Trägerplatte 16 aufliegende Rand 9 des Verbindungselements 4. Darüber hinaus ist die Bohrung 10 des Verbindungselements 4 zu erkennen, in welche hinein der Stift 12 des Federelements 3 einzuführen ist. Fig. 1 ist die Anordnung des Verbindungselements 4 am Federelement 3 zu entnehmen, wobei gemäß der hier dargestellten Draufsicht von unten das Stiftende 5 des in der Bohrung 10 befindlichen Stiftes 12 des Federelements 3 zu erkennen ist.

Die Fign. 5 und 6 zeigen an der Trägerplatte 16 endmontiertes Auflagerelement 1. Je nach Größe der verwendeten Trägerplatte 16 kann diese mit einer Mehrzahl von Auflagerelementen 1 bestückt sein, wobei die Auflagerelemente 1 vorzugsweise reihenförmig an der Trägerplatte 16 angeordnet sind.

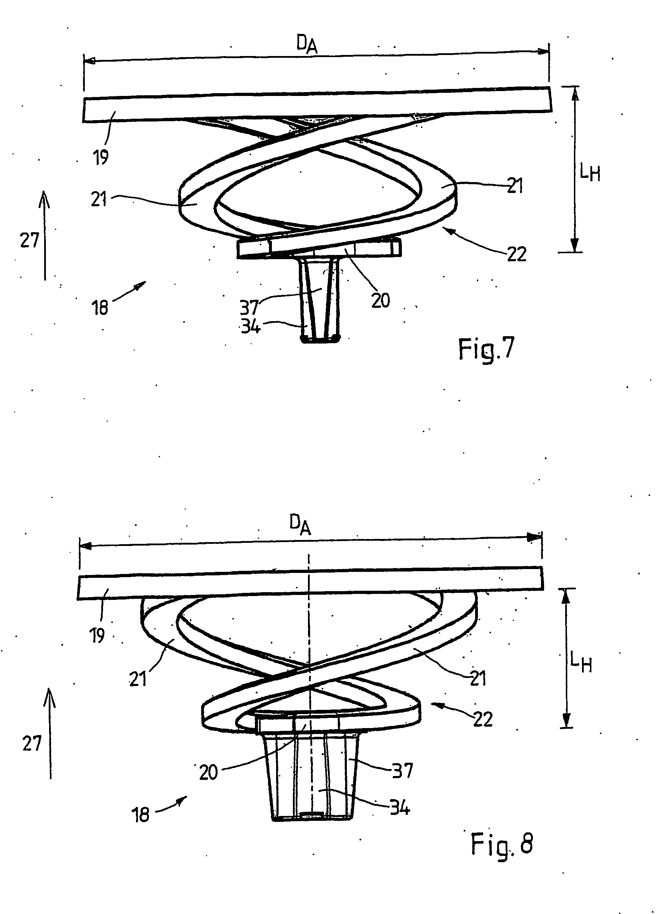

Das in den Fign. 7 bis 11 dargestellte Federelement 18 besteht aus einem Kopfabschnitt 19 und einem Basisabschnitt 20. Zwischen Kopfabschnitt 19 und Basisabschnitt 20 erstrecken sich in Höhenrichtung 27 Federarme 21. Vorgesehen sind insgesamt zwei Federarme 21, die sich ausgehend vom Basisabschnitt 20 wendelförmig bis zum Kopfabschnitt 14 erstrecken. Das Federelement 18 ist erfindungsgemäß einstückig ausgebildet und besteht aus Kunststoff.

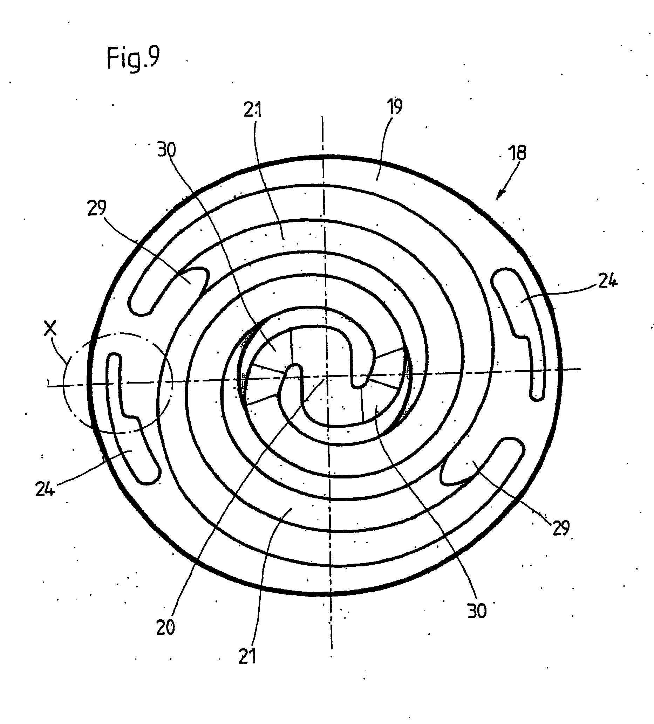

Wie insbesondere Fig. 9 entnommen werden kann, ist der Basisabschnitt 20 S-förmig ausgebildet. Er verbindet die beiden basisabschnittseitigen Endbereiche 30 der Federarme 21.

Wie gleichfalls insbesondere Fig. 9 entnommen werden kann, ist der Kopfabschnitt 19 ringförmig ausgebildet. Die vom Basisabschnitt 20 ausgehenden Federarme 21 gehen innenumfangsseitig des Kopfabschnittes 19 in diesen über. Dabei liegen die kopfabschnittseitigen Endbereiche 29 der Federarme 21 einander gegenüberliegend am Kopfabschnitt 19 an.

Der durch die beiden Federarme 21 gebildete Federkörper 22 weist ausgehend vom Kopfabschnitt 19 eine sich nach Art eines Kegels verjüngende Ausgestaltungsform auf, wie insbesondere der Seitenansicht des Federelements nach den Fign. 7 und 8 zu entnehmen ist.

Die Wendelung beider Federarme 21 beträgt jeweils 360°, wobei die kopfabschnittseitigen Endbereiche 29 der Federarme 21 ebenso wie die basisabschnittseitigen Endbereiche 30 der Federarme 21 einander gegenüberliegend am Basisabschnitt 20 bzw. am Kopfabschnitt 19 angeordnet sind.

Es versteht sich von selbst, daß die vorbeschriebene Ausgestaltungsform des Federelements 18 je nach Anwendungsfall gestaltet werden kann. So kann beispielsweise eine Wendelung je Federarm 21 von mehr oder weniger 360° vorgesehen sein. Auch kann der Federkörper 22 aus mehr als zwei Federarmen 21 gebildet sein. Beispielsweise kann eine drei- oder vierzügige Ausbildung vorgesehen sein.

Das in den Fign. 7 bis 11 gezeigte Federelement 18 ist nicht maßstabsgetreu dargestellt. Bevorzugterweise weist der Außendurchmesser des ringförmigen Kopfabschnitts 19 eine Größe von D_{A} = 11 cm auf. Je nach Anwendungsfall können auch andere Durchmessergrößen vorgesehen sein. In Höhenrichtung 27 weist das Federelement 18 bevorzugterweise eine Längserstreckung von L_{H} ≅ 5 cm auf. Andere Längserstreckungen von L_{H} ≅ beispielsweise 3 cm bis 7 cm sind in Abhängigkeit des Anwendungsfalls gleichfalls denkbar.

Das Federelement 18 zeichnet sich durch seine kompakte Baugröße sowie die Möglichkeit der vielfachen Verwendbarkeit aus. Es kann als federnde Unterlage für Sitz-oder Liegeflächen von Sitzmöbeln und Betten, Auto- oder LKW-Sitzen, Garten- und Campingmöbeln, Massage- und anderen Pflegeeinrichtungen oder dergleichen eingesetzt werden. Es ist leicht montierbar bzw. demontierbar, witterungsfest und korrosionsbeständig sowie unter Verwendung von Wasser leicht zu reinigen.

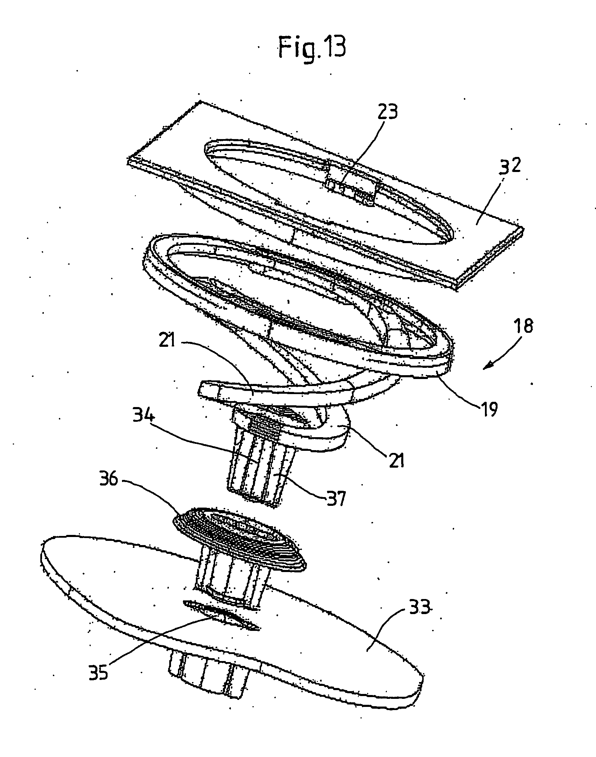

Gemäß einer besonderen Ausführungsform kann das Federelement 18 mit einer kopfabschnittseitig anzuordnenden Auflagerfläche in Form beispielsweise einer Kopfplatte 32 kombiniert werden, wie dies in Fig. 13 gezeigt ist. Für eine verdrehsichere Anordnung des Federelements 18 an einer Kopfplatte können außenumfangsseitig am ringförmigen Kopfabschnitt 19 in den Fign. nicht gezeigte Ausnehmungen vorgesehen sein. Diese greifen bei einer Anordnung an einer Kopfplatte 32 in entsprechend ausgebildete Haltenuten der Kopfplatte ein, so daß eine relative Verdrehung des Federelements 18 gegenüber der Kopfplatte 32 unterbunden ist. Gemäß einer besonderen Ausgestaltungsform der Erfindung können mehrere Federelemente 18 an ein- und derselben Kopfplatte 32 angeordnet sein.

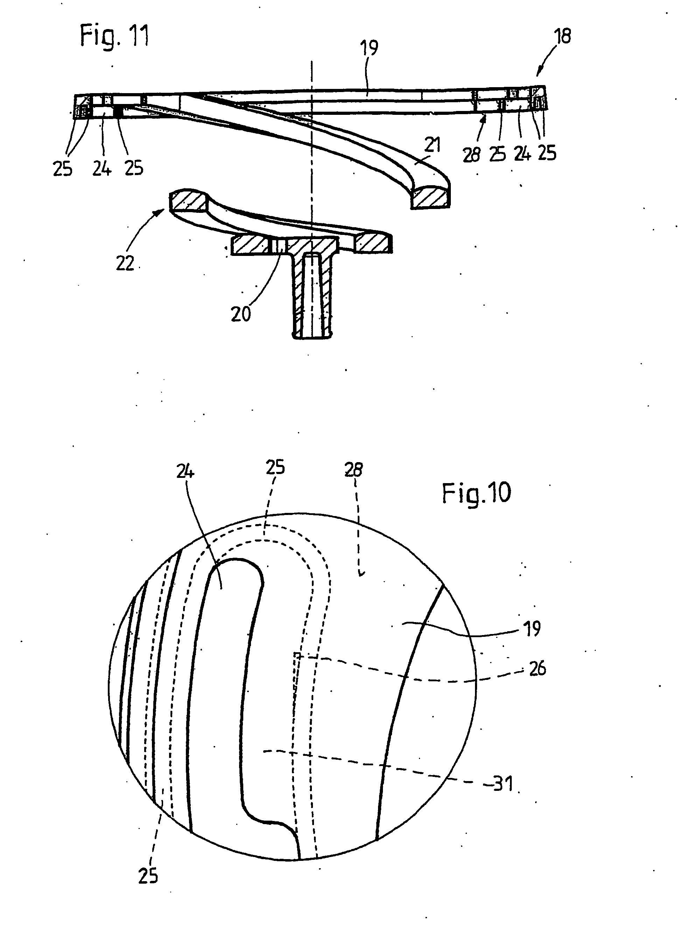

Verbunden wird das Federelement 18 mit der Kopfplatte 32 vorzugsweise mittels eines sogenannten Bajonettverschlusses. Zu diesem Zweck verfügt der Kopfabschnitt 19 über Durchbrüche 24, die als Langlöcher ausgebildet sind, die in Längsrichtung Abschnitte unterschiedlicher Querausdehnung aufweisen. Wie insbesondere Fig. 10 entnommen werden kann, wird auf diese Weise innerhalb der Durchbrüche 24 ein Hinterschnitt 31 ausgebildet, der von entsprechend an der Kopfplatte 32 ausgebildeten Halteelemente 23 hintergriffen werden kann. Geschaffen wird auf diese Weise eine kraftübertragende, jederzeit wieder lösbare Verbindung zwischen Federelement 18 und Kopfplatte 32.

Wie Fig. 10 des weiteren entnommen werden kann, sind unterseitig des Kopfabschnitts 19 im Bereich der Durchbrüche 24 Rastmittel 26 vorgesehen. Diese Rastmittel 26 dienen der Sicherung eines in die Durchbrüche 24 eingeführten Halteelements 23, womit ein unbeabsichtigtes Lösen der Verbindung zwischen Federelement 18 und Kopfplatte 32 unterbunden ist.

An der Unterseite 28 des Kopfabschnitts 19 sind zur Verstärkung desselben Versteifungsrippen 25 angeordnet. In dem Ausführungsbeispiel nach Fig. 11 sind insgesamt drei Versteifungsrippen 25 vorgesehen. Zum einen ist jeder Durchbruch 24 von einer Versteifungsrippe 25 umgeben, zum anderen ist eine Versteifungsrippe 25 im äußeren Randbereich des Kopfabschnittes 19 vorgesehen.

Gemäß einer weiteren Ausführungsform kann das Federelement 18 auf einer in Fig. 13 beispielhaft gezeigten Tragkonstruktion angeordnet sein. Als Tragkonstruktion 33 im Sinne der Erfindung kommen all solche Tragkonstruktionen in Frage, die das Federelement 18 für eine bestimmungsgemäße Verwendung aufnehmen können, das heißt an denen das Federelement 18 angeordnet werden kann. Zu nennen sind in diesem Zusammenhang beispielsweise Liegeflächenelemente, Rahmenkonstruktionen, Lattenroste oder dergleichen. Angeordnet wird das Federelement 18 an einer solchen Tragkonstruktion 33 basisabschnittseitig. Zu diesem Zweck kann der Basisabschnitt 20 mit einem entsprechenden Verbindungselement 34, beispielsweise in Form eines stiftförmigen Fortsatzes ausgestaltet sein. Die Tragkonstruktion 33 weist eine zum stiftförmigen Fortsatz korrespondierend ausgebildete Ausnehmung 35 auf, in die diese hineingesteckt werden können. Vorzugsweise erfolgt eine solche Anordnung verdrehsicher, was beispielsweise dadurch erreicht werden kann, daß der stiftförmige Fortsatz im Querschnitt eine von der Kreisform abweichende Form aufweist. Selbstredend sind auch andere Ausgestaltungsformen der Verbindung zwischen Federelement 18 einerseits und Tragkonstruktion 33 andererseits denkbar, doch hat sich die vorbeschriebene Verbindungsart insofern als vorteilhaft herausgestellt, als daß sie auf einfache Weise gebildet bzw. wieder gelöst werden kann, was den Montage- bzw. Demontageaufwand auf ein Minimum reduziert. Zudem ist die Verbindung lösbar, so daß das Federelement 18 zwecks Reinigungsvorgang von der Tragkonstruktion wahlweise getrennt werden kann. Vorzugsweise dient eine Tragkonstruktion 33 der Anordnung mehrerer Federelemente 18, die bevorzugterweise in Reihe und/oder symmetrisch von der Tragkonstruktion 33 gehalten werden.

Gemäß einem bevorzugten Ausführungsbeispiel der Erfindung wird der als Verbindungselement 34 dienende stiftförmige Fortsatz unter Zwischenordnung eines hülsensförmigen Körpers 36 in die Ausnehmung 35 der Tragkonstruktion 33 eingestellt. Dargestellt ist ein solcher hülsenförmiger Körper 36 beispielhaft in Fig. 13. Gebildet ist der hülsenförmige Körper 36 vorzugsweise aus einem gummielastischen Material. Zwecks Montage des Federelements 18 wird der hülsenförmige Körper 36 in die Ausnehmung 35 der Tragkonstruktion 33 eingesteckt. Alsdann wird das Federelement 18 mit dem als Verbindungselement 34 dienenden Fortsatz voran in den hülsenförmigen Körper 36 geführt. Das Verbindungselement 34 verfügt über seitlich angeordnete Verstärkungsrippen, die als Schwerter 37 bezeichnet werden können (vgl. Fig. 8). Sowohl Ausnehmung 35 als auch hülsenförmiger Körper 36 sind zum Querschnitt des Verbindungselements 34 samt daran angeordneter Schwerter 37 korrespondierend ausgebildet und verfügen über schlitzartige Erweiterung, die die Schwerter 37 aufnehmen, wie insbesondere Fig. 13 entnommen werden kann. Bei einem Einführen des Verbindungselements 34 in den hülsenförmigen Körper 36 wird dieser durch die Schwerter 37 des Verbindungselements 34 gespreizt, infolge dessen eine feste Verbindung zwischen Federelement 18 und Tragkonstruktion ausgebildet wird. Zudem wird durch diese Ausgestaltung erreicht, daß sowohl der hülsenförmige Körper 36 gegenüber dem Verbindungselement 34 als auch gegenüber der Ausnehmung 35 verdrehsicher angeordnet ist. Der vorzugsweise aus elastischem Material gebildete hülsenförmige Körper 36 kann zur lagesicheren Anordnung des Federelements 18 an der Tragkonstruktion 33 zudem in die Ausnehmung 35 eingedrückt, d. h. eingepreßt sein. Zu diesem Zweck verfügt der hülsenförmige Körper 36 über ein gegenüber der Ausnehmung 35 leichtes Übermaß. Die geometrische Ausgestaltung von Ausnehmung 35 und hülsenförmigem Körper 36 ist dabei derart aufeinander abgestimmt, daß das Federelement 18 unter normaler Handkraft montiert bzw. demontiert werden kann. Die Verwendung von etwaigem Werkzeug ist nicht erforderlich.

Eine explosionsartige Darstellung eines aus Federelement 18 und Kopfplatte 32 bestehenden Federmoduls zeigt Fig. 13. Des weiteren dargestellt in Fig. 13 ist die Tragkonstruktion 33 sowie der hülsenförmige Körper 36, der der Anordnung des Federelements 18 an der Tragkonstruktion 33 dient.

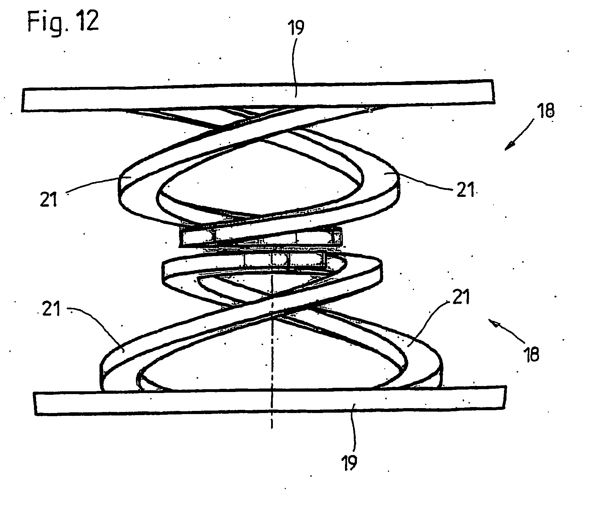

Ein Federmodul zeigt Fig. 12. Das hier dargestellte Federmodul besteht aus zwei Federelementen 18, die basisabschnittseitig miteinander verbunden sind. Es versteht sich von selbst, daß auch die beiden in Fig. 12 gezeigten Federelemente 18 kopfabschnittseitig mit jeweils einer Kopfplatte 35 gemäß Fig. 13 verbunden werden können.

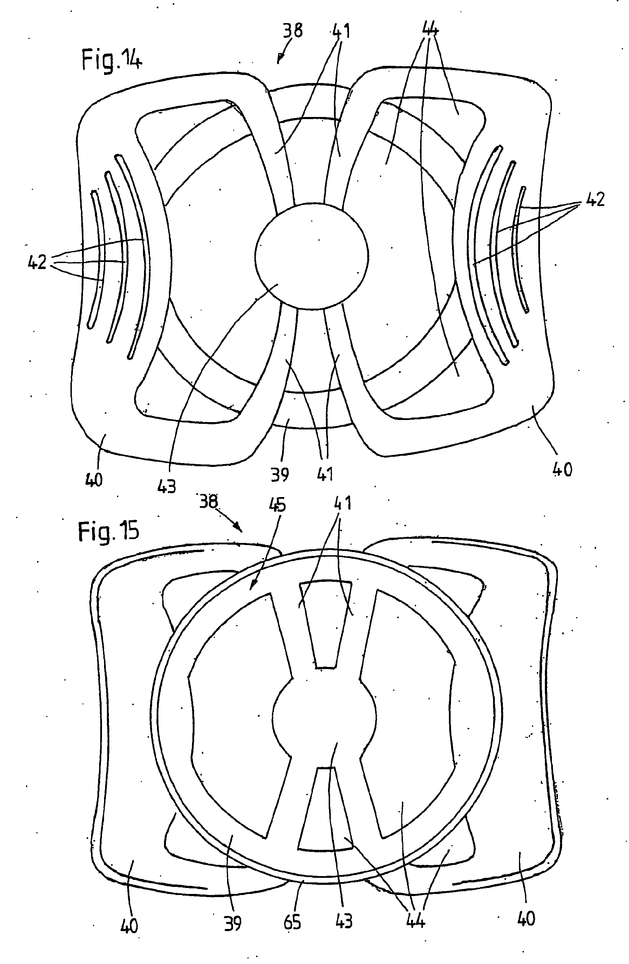

Die Figuren 14 und 15 zeigen ein Aufnahmeelement 38 in Alleinstellung, wobei Figur 14 das Aufnahmeelement 38 in einer Draufsicht von oben und Figur 15 das Aufnahmeelement 38 in einer Draufsicht von unten zeigt.

Das Aufnahmeelement 38 ist einstückig ausgebildet und besteht aus Kunststoff. Die Herstellung des erfindungsgemäßen Aufnahmeelement 38 erfolgt vorzugsweise im Spritzgußverfahren.

Gebildet ist das Aufnahmeelement 38 aus einem kreisförmigen Abschnitt 39 einerseits, wie insbesondere Figur 15 entnommen werden kann, und zwei daran angeordneten Flächenabschnitten 40 andererseits. Der kreisförmige Abschnitt 39 weist auf seiner der Matratze, dem Polster oder dergleichen abgewandten Seite einen Aufnahmebereich 45 auf, wie insbesondere Figur 15 erkennen läßt, dessen Funktion im weiteren noch beschrieben werden wird. Umgeben ist der Aufnahmebereich 45 von einem umlaufenden und am kreisförmigen Abschnitt 39 angeordneten Kragen 65, dessen Funktion gleichfalls im weiteren noch beschrieben werden wird.

Verbunden sind der kreisförmige Abschnitt 39 und die beiden Flächenabschnitte 40 mittels zweier Verstärkungsrippen 41, wie insbesondere Figur 13 zu entnehmen ist. Innerhalb des kreisförmigen Abschnittes 39 ist ein Mittelabschnitt 43 angeordnet, in welchen Mittelabschnitt 43 die Verstärkungsrippen 41 münden. Dieser Sachzusammenhang kann sowohl Figur 14 als auch Figur 15 entnommen werden.

Das Aufnahmeelement 38 verfügt über Durchbrüche 44, die insbesondere der Be- und Entlüftung einer auf das Aufnahmeelement aufgelegten Matratze, eines Polsters oder dergleichen dienen.

Der vorbeschriebene Aufbau des plattenförmigen und nach Art eines Tellers ausgebildeten Aufnahmeelements 38 zeichnet sich durch seine hohe Formstabilität und Verwindungssteifigkeit auch gegenüber Biege- und/oder Torsionsbeanspruchungen aus.

Die Flächenabschnitte 40 tragen auf ihrer im bestimmungsgemäßen Verwendungszustand der Matratze, dem Polster oder dergleichen zugewandten Seite Rippen 42. Diese Rippen dienen nicht nur der zusätzlichen Stabilisierung des Aufnahmeelements 38, auch sorgen die Rippen 42 für eine vergleichsweise sichere Lagepositionierung der Matratze, des Polsters oder dergleichen auf dem Aufnahmeelement 38, denn helfen diese Rippen 42, eine ungewollte Relativverschiebung zwischen Matratze, Polster oder dergleichen auf der einen Seite und Aufnahmeelement 38 auf der anderen Seite zu verhindern.

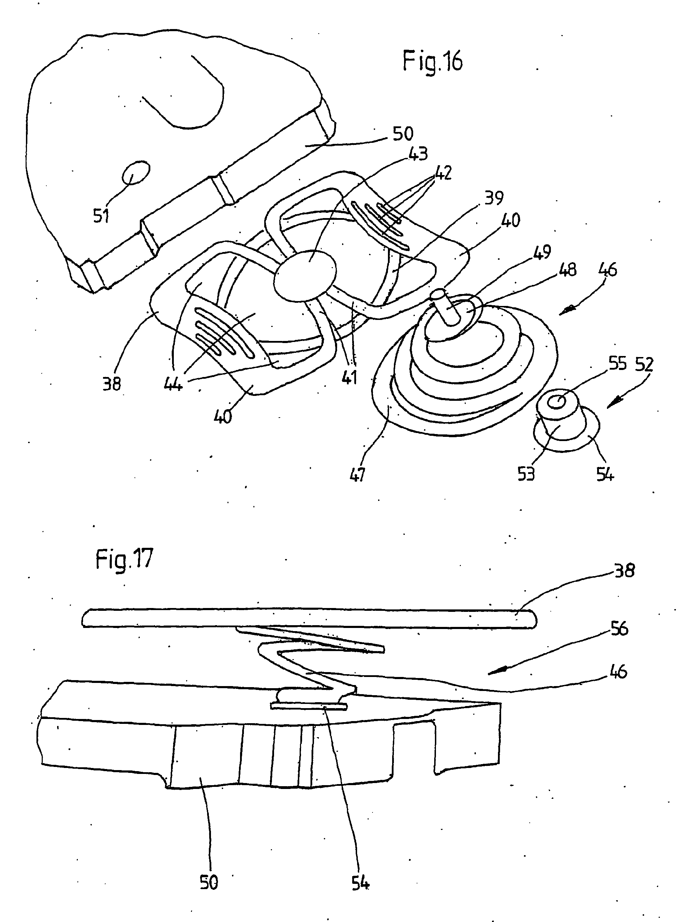

Das Aufnahmeelement 38 ist auswechselbar an einem Tragelement 46, wie dies beispielsweise in Form eines federelastischen Elements in den Figuren 16 und 17 gezeigt ist, anordbar. Zu diesem Zweck verfügt das Aufnahmeelement 38 tragelementseitig über den schon vorgenannten Aufnahmebereich 45. Im montierten Zustand nimmt dieser Aufnahmebereich 45 einen hierzu korrespondierend ausgebildeten Abschnitt des Tragelements 46 auf. Zwecks verschiebsicherer Anordnung des Aufnahmeelements 38 am Tragelement 46 ist der Aufnahmebereich 45 von einem umlaufenden Kragen 65 umgeben, der eine Relativverschiebung zwischen Aufnahmeelement 38 einerseits und Tragelement 46 andererseits verhindert. Zwecks verdrehsicherer Anordnung des Aufnahmeelements 38 am Tragelement 46 können am Aufnahmeelement 38 ausgebildete und in den Figuren nicht explizit gezeigte Rastmittel vorgesehen sein. Zwecks verdrehsicherer Anordnung können Aufnahmeelement 38 und Tragelement 46 auch miteinander verschraubt sein.

Im montierten Zustand bilden das Aufnahmeelement 38 und das Tragelement 46 ein Auflagerelement 56 aus, wie beispielhaft in Figur 17 gezeigt. Zu erkennen ist hier, daß das aus Aufnahmeelement 38 und Tragelement 46 bestehende Auflagerelement 56 an einer Tragkonstruktion 50 angeordnet ist. Diese Anordnung ist auswechselbar ausgestaltet, so daß wahlweise sowohl das Auflageelement 56 von der Tragkonstruktion 50 als auch das Aufnahmeelement 38 vom Tragelement 46 getrennt werden kann. Die Anordnung des aus Aufnahmeelement 38 und Tragelement 46 bestehenden Auflageelements 56 an der Tragkonstruktion 50 wird vorzugsweise unter Zwischenordnung eines Verbindungselements 52 vorgenommen. Gebildet ist dieses Verbindungselement 52 vorzugsweise aus einem thermoplastischen Kunststoff und weist die Form eines Stopfens auf, wie insbesondere Figur 16 entnommen werden kann.

Figur 16 ist des weiteren zu entnehmen, daß das beispielsweise als Federelement ausgebildete Tragelement 46 aus einem Federkörper 47, einem Basisteil 48 und einem am Basisteil 48 angeordneten Stift 49 gebildet ist. Das Verbindungselement 52 ist, wie vorstehend bereits beschrieben, nach Art eines Stopfens ausgebildet und weist einen Grundkörper 53 sowie einen daran angeordneten, umlaufenden Rand 54 auf. Zur auswechselbaren Anordnung des Tragelements 46 an einer Tragkonstruktion 50 kann das Verbindungselement 52 auswechselbar in eine korrespondierend an der Tragkonstruktion 50 ausgebildete Bohrung 51 eingesteckt werden. Dabei dient der Rand 54 des Verbindungselements 52, wie insbesondere Figur 16 entnommen werden kann, der Abstützung des Verbindungselements 52 gegenüber der Tragkonstruktion 50.

Das Verbindungselement 52 verfügt seinerseits über eine Bohrung 55, in die hinein der Stift 49 des Tragelements 46 vorzugsweise austauschbar eingeführt werden kann. Um eine verdrehsichere Anordnung des Tragelements 46 gegenüber der Tragkonstruktion 50 sicherzustellen, ist sowohl das Verbindungselement 52 am Tragelement 46 als auch an der Tragkonstruktion 51 verdrehsicher angeordnet.

In der in Figur 16 dargestellten Ausführungsform besteht das als federelastische Element ausgebildete Tragelement 46 aus einem wendelförmig ausgebildeten Federkörper 47, einem Basisteil 48 sowie einem am Basisteil 48 angeordneten Stift 49, der korrespondierend zur Bohrung 55 des Verbindungselements 52 ausgebildet ist. Im montierten Zustand stützt sich das Basisteil 48 des Tragelements 46 auf dem Verbindungselement 52 ab, wie insbesondere Figur 16 zeigt.

Das Aufnahmeelement 38 besteht aus einem vorzugsweise als Spritzgußteil ausgebildeten Formelement, wie vorstehend bereits beschrieben. Zur Anordnung des Aufnahmeelements 38 am Tragelement 46 weist das Aufnahmeelement 38 auf seiner dem Tragelement 46 zugewandten Seite einen Aufnahmebereich 45 auf. Dieser Aufnahmebereich 45 ist in seiner Größe derart bemessen, daß er den letzten Wendelgang des Federkörpers 47 vollständig aufnimmt. Auf diese Weise kann eine gleichförmige Krafteinleitung über das Aufnahmeelement 38 in das Tragelement 46 sichergestellt werden. Zur Festlegung des Aufnahmeelements 38 gegenüber dem Tragelement 46 kann der Aufnahmebereich 45 über in den Figuren nicht dargestellte Verbindungseinrichtungen verfügen. Dabei sind die Verbindungseinrichtungen derart ausgebildet, daß eine auswechselbare Anordnung des Aufnahmeelements 38 am Tragelement 46 möglich ist.

Wie vorstehend bereits beschrieben, zeigt Figur 17 unter anderem die Anordnung eines Verbindungselements 52 an einer Tragkonstruktion 50. Deutlich zu erkennen ist hier der auf der Oberfläche der Tragkonstruktion aufliegende Rand des Verbindungselements 52. Darüber hinaus ist zu erkennen, daß das Tragelement 46 mit seinem in der Figur 17 nicht zu erkennenden Stift 49 voran in das Verbindungselement 52 eingeführt ist.

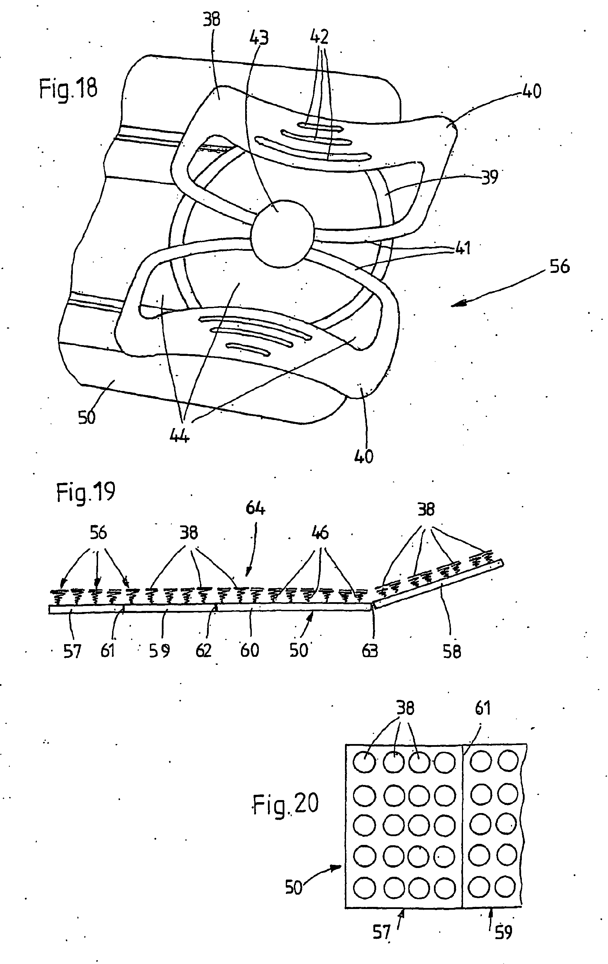

In zwei unterschiedlichen Ansichten zeigen die Figuren 17 und 18 ein mit einem Aufnahmeelement 38 bestücktes Tragelement 46, welches an einer Tragkonstruktion 50 endmontiert angebracht ist. Je nach Größe der eingesetzten Tragkonstruktion 50, die beispielsweise in Form einer Liegefläche für ein Bett ausgebildet sein kann, wie beispielhaft in den Figuren 19 und 20 dargestellt, kann diese mit einer Mehrzahl von mit Aufnahmeelementen 38 versehenen Tragelementen 46 ausgerüstet sein, wobei die Tragelemente 46 vorzugsweise reihenförmig an der Tragkonstruktion 50 angeordnet sind.

Eine solche Anordnung zeigen beispielhaft die Figuren 19 und 20. Zu erkennen ist hier eine beispielsweise als Liegefläche verwendete Tragkonstruktion 50. Die Liegefläche wird von einem in den Figuren der besseren Übersicht wegen nicht dargestellten Rahmenkonstruktion eines Bettes, insbesondere eines Kranken- und/oder Pflegebettes aufgenommen. Die hier beispielhaft dargestellte Tragkonstruktion 50 besteht aus einem Fußabschnitt 57, einem Kopfabschnitt 58, einem Beinabschnitt 59 und einem Beckenabschnitt 60, wobei die einzelnen Abschnitte 57, 58, 59 und 60 mittels entsprechender Gelenke 61, 62 und 63 relativ zueinander verschwenkbar angeordnet sind, wie beispielhaft anhand des Kopfabschnittes 58 gezeigt, der im Unterschied zu den übrigen Abschnitten 57, 59 und 60 eine leicht aufgestellte Position einnimmt.

Jeder der vorbenannten Abschnitte 57, 58, 59 und 60 verfügt jeweils über hieran matratzenseitig angeordnete Auflagerelemente 56, wobei ein jedes Auflagerelement 56 über ein Aufnahmeelement 38 und ein Tragelement 46 verfügt. In ihrer Gesamtheit bilden die einander nebengeordneten Aufnahmeelemente 38 eine gemeinsame Auflagerfläche 64. Wie ausschnittsweise in Figur 20 dargestellt, sind die Aufnahmeelemente, d. h. die die Aufnahmeelemente 38 tragenden Tragelemente 46 vorzugsweise reihenförmig sowohl in Quer- als auch in Längserstreckung angeordnet.

Figur 19 kann des weiteren entnommen werden, daß gemäß einer besonderen Ausgestaltung im Bereich des Kopfabschnittes 58 Auflagerelemente 56 vorgesehen sind, welche im Unterschied zu den Auflageelementen der übrigen Abschnitte 57, 59 und 60 Aufnahmeelemente 38 zeigen, die durch jeweils zwei Tragelemente 46 gestützt sind.

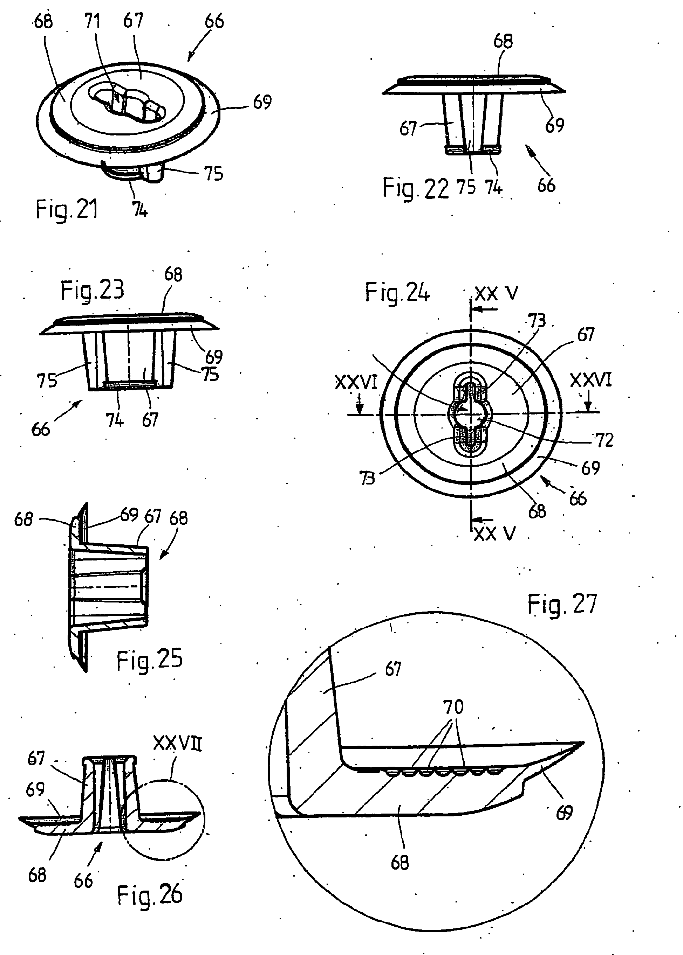

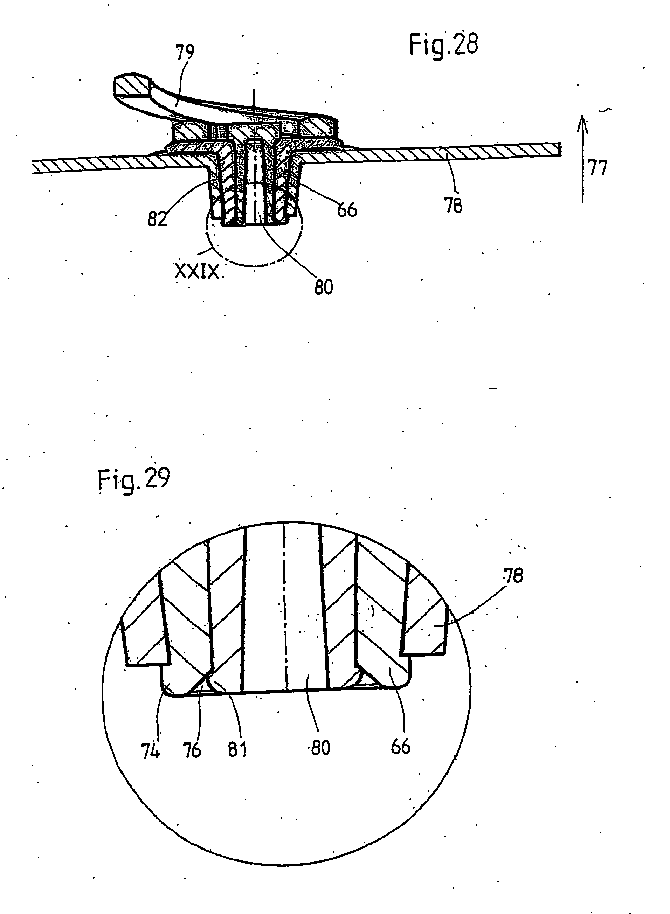

Die Fign. 21 bis 27 zeigen den erfindungsgemäßen Verbinder 66 in einer bevorzugten Ausführungsform. Die Fign. 28 und 29 zeigen die Anordnung eines als Federelement ausgebildeten Funktionselementes 79 an einer als Lattenrost oder plattenförmigen Unterlage ausgebildeten Basis 78. In den Fign. gleiche Elemente sind mit gleichen Bezugszeichen identifiziert. Es versteht sich von selbst, daß die Darstellung gemäß der Fign. 21 bis 29 nicht maßstabsgetreu ist

Fig. 21 zeigt den erfindungsgemäßen Verbinder 66 in einer schematischen Perspektivdarstellung. Zu erkennen ist, daß der Verbinder 66 aus einem stopfenförmigen Abschnitt 67 gebildet ist, der in Höhenrichtung 77 an seinem oberen Ende einen Kragen 68 trägt. Der Kragen 68 seinerseits ist mit einer umlaufenden Dichtlippe 69 versehen, die im montierten Zustand des Verbinders 66, wie sie beispielhaft in Fig. 28 dargestellt ist, auf der Oberseite der Basis 78 anliegt.

Der stopfenförmige Abschnitt 67 ist mit zwei Verstärkungsrippen 75 versehen, die außenumfangsseitig am stopfenförmigen Abschnitt 67 angeordnet sind und die sich radial nach außen gerichtet erstrecken.

Eine Ausschnittsvergrößerung des Kragens 68 zeigt Fig. 27. Zu erkennen ist hier, daß der Kragen 68 außenumfangsseitig eine Dichtlippe 69 aufweist, die in der schon vorbeschriebenen Weise im montierten Zustand des Verbinders 66 auf der Oberseite der Basis 78 anliegt. Fig. 27 kann des weiteren entnommen werden, daß der Kragen 68 an seiner der Basis 78 im montierten Zustand gegenüberliegenden Seite Dichtlamellen 70 aufweist. Dichtlippe 69 und Dichtlamellen 70 sorgen dafür, daß bei einem Auftritt etwaiger Flüssigkeiten der Verbindungsbereich zwischen Funktionselement 79 und Basis 78 abgedichtet ist. Von Vorteil ist diese Ausgestaltung nicht nur, um ungewollten Flüssigkeitsaustritt zurückzuhalten, auch ermöglicht diese Ausgestaltung eine Reinigung von Basis 78, Verbinder 66 und Funktionselement 79 mittels Wasser, ohne daß die Gefahr bestünde, daß das zum Zwecke der Reinigung eingesetzte Wasser auf die Unterseite der Basis 78 gelangt.

Für eine Anordnung des Funktionselementes 79 an der Basis 78 ist der Verbinder 66 in einem ersten Schritt zunächst in die an der Basis 78 ausgebildete Ausnehmung 82 einzustecken. Dabei sind die Ausnehmung 82 und der stopfenförmige Abschnitt 67 hinsichtlich ihres jeweiligen Querschnitts korrespondierend aufeinander abgestimmt. Die am stopfenförmigen Abschnitt 67 angeordneten Verstärkungsrippen 75 dienen dabei zum einen einer verdrehsicheren Anordnung des stopfenförmigen Abschnitts 67 gegenüber der Basis 78, zum anderen bewirken sie eine Verstärkung des stopfenförmigen Abschnitts 67 sowohl gegenüber Biege- als auch gegenüber Torsionsbeanspruchungen, was eine positionsgenaue Einführung des Verbinders 66 in die an der Basis 78 ausgebildete Ausnehmung 82 vereinfacht. Das Funktionselement 79 verfügt auf seiner dem Verbinder 66 zugewandten Seite über ein Verbindungselement 80. Dieses Verbindungselement 80 wird in die Ausnehmung 71 des Verbinders eingeführt. Im Ergebnis entsteht so eine positionsgenaue und sichere Anordnung des Funktionselementes 79 gegenüber der Basis 78. Wie insbesondere den Fign. 21 und 24 entnommen werden kann, ist die Ausnehmung 71 des Verbinders 66 dergestalt, daß das Verbindungselement 80 verdrehsicher innerhalb der Ausnehmung 71 des Verbinders 66 angeordnet werden kann. Vorgesehen ist zu diesem Zweck, daß die Ausnehmung 71 über einen ersten Abschnitt 72 und zwei zweite Abschnitte 73 verfügt, wobei der erste Abschnitt im wesentlichen kreisförmig ausgebildet ist, wobei die beiden zweiten Abschnitte jeweils nach Art eines Schlitzes ausgebildet sind. In diese beiden zweiten Abschnitte 72 greifen im montierten Zustand am Verbindungselement 80 ausgebildete Erweiterungen ein, wodurch eine verdrehsichere Anordnung des Funktionselementes 79 gegenüber dem Verbinder 66 gewährleistet ist. Zudem drücken diese Erweiterungen des Verbindungselements 80 den Verbinder 66 auseinander, sobald das Verbindungselement 80 in die Ausnehmung 71 des Verbinders 66 eingeführt wird. Bedingt durch dieses Auseinanderdrücken werden die Verstärkungsrippen 75 des stopfenförmigen Abschnittes 67 auseinandergepreßt, wodurch ein besonders sicherer Halt des stopfenförmigen Abschnittes 67 innerhalb der in der Basis 68 ausgebildeten Ausnehmung 82 entsteht. Die Verstärkungsrippen 75 dienen mithin dreierlei Funktionen. Sie verstärken den stopfenförmigen Abschnitt 67, sie dienen einer verdrehsicheren Anordnung des stopfenförmigen Abschnitts 67 innerhalb der an der Basis 78 ausgebildeten Ausnehmung 82 und sie dienen infolge ihres Auseinanderdrückens einem besonderen sicheren Halt des Verbinders 66 innerhalb der an der Basis 78 ausgebildeten Ausnehmung 82.

An seinem dem Kragen gegenüberliegenden Ende verfügt der stopfenförmige Abschnitt 67 über ein Rastmittel 74, welches beispielsweise die Form einer umlaufenden Wulst aufweist. Im montierten Zustand des Verbinders 66 liegt das Rastmittel 74 an der Unterseite der Basis 78 an, wie insbesondere Fig. 29 entnommen werden kann. Bedingt durch diese Anordnung ist ein unbeabsichtigtes Herausführen des Verbinders 66 aus der an der Basis 78 ausgebildeten Ausnehmung 82 verhindert. Zu Demontagezwecken ist der stopfenförmige Abschnitt 67 an seinem das Rastmittel 74 tragenden Ende leicht zusammenzudrücken und durch die Ausnehmung 82 hindurchzuführen. Die geometrischen Abmessungen des Rastmittels 74 sowie die Materialeigenschaften des stopfenförmigen Abschnitts 67 sind dabei derart aufeinander abgestimmt, daß ein solches Zusammendrücken des stopfenförmigen Abschnitts 67 unter bloßer Anwendung von Fingerkraft, das heißt ohne den Einsatz eines etwaigen Werkzeuges, erfolgen kann.

Fig. 29 kann des weiteren entnommen werden, daß der stopfenförmige Abschnitt 67 an seinem dem Kragen 68 gegenüberliegenden Ende über eine umlaufende Nut 76 verfügt. Im montierten Zustand greift in diese Nut 76 eine am Verbindungselement 80 ausgebildete Hinterschneidung 81 ein, infolgedessen das Funktionselement 79 gegenüber dem Verbinder 66 lagesicher fixiert ist. Das Funktionselement 79 kann mithin nicht ungewollt aus dem Verbinder 66 herausgelöst werden, womit insgesamt eine lagesichere Fixierung des Funktionselementes 79 gegenüber der Basis 78 erreicht ist.

Gemäß dem Ausführungsbeispiel nach den Fign. 28 und 29 ist das Funktionselement 79 als Federelement ausgebildet, wobei Fig. 28 im Teilausschnitt einen Federarm des Federelementes zeigt. Die Basis 78 ist eine aus Kunststoff bestehende Tragkonstruktion, die vorzugsweise als tiefgezogene Liegefläche ausgebildet ist. Der Verbinder 66 besteht aus einem elastischen Material, vorzugsweise Kunststoff. Zwecks Anordnung des als Funktionselement 79 ausgebildeten Federelements an der Basis 78 wird zunächst der in den Fign. 21 bis 27 dargestellte Verbinder 66 in die Ausnehmung 82 der Basis 78 eingesteckt. In Höhenrichtung 77 weist der stopfenförmige Abschnitt 67 eine Erstreckung von beispielsweise 2 bis 6, vorzugsweise 5 cm auf. Das genaue Maß der Längserstreckung ergibt sich dabei in Abhängigkeit der Dicke der Basis 78 in Höhenrichtung 77 bzw. der Dicke des die Ausnehmung 82 bereitstellenden Doms, wie in Fig. 28 dargestellt. Entscheidend ist nämlich, daß der stopfenförmige Abschnitt 67 in Höhenrichtung 77 eine solche Längserstreckung aufweist, daß einerseits die Rastmittel 74 an der Unterseite der Basis 78 verrastend anliegen und andererseits der die Dichtlippe und die Dichtlamellen tragende Kragen 68 dichtend auf der Oberseite der Basis 78 anliegt. Ist der Verbinder 66 in die Ausnehmung 82 der Basis 78 eingesteckt, so wird alsdann das als Federelement ausgebildete Funktionselement 79 in den Verbinder 66 eingeführt, zu welchem Zweck das verbinderseitig am Funktionselement 79 angeordnete Verbindungselement, das die Form eines stiftförmigen Fortsatzes aufweist, in die Ausnehmung 71 des Verbinders 66 eingesteckt wird. Infolge des Einsteckens des Verbindungselementes 80 in die Ausnehmung 71 des Verbinders 66 wird der Verbinder 66 leicht auseinandergedrückt, infolge dessen die Verstärkungsrippen 75 umfangsseitig an die Ausnehmung 82 der Basis 78 angepreßt werden. Dabei können die Verstärkungsrippen 75, wie beispielhaft den Fign. 21 und 22 entnommen werden kann, keilförmig ausgebildet sein. Zwecks Ausbildung einer großflächigen Unterlage für die federnde Abstützung der Sitz- oder Liegefläche eines Sitz- oder Liegemöbels werden eine Vielzahl von als Federelementen ausgebildete Funktionselemente 79 auf einer Basis 78 angeordnet. Dementsprechend verfügt die Basis 78 über eine Vielzahl von Ausnehmungen 82, in die jeweils zur Anordnung eines Federelementes ein erfindungsgemäßer Verbinder 66 anzuordnen ist.

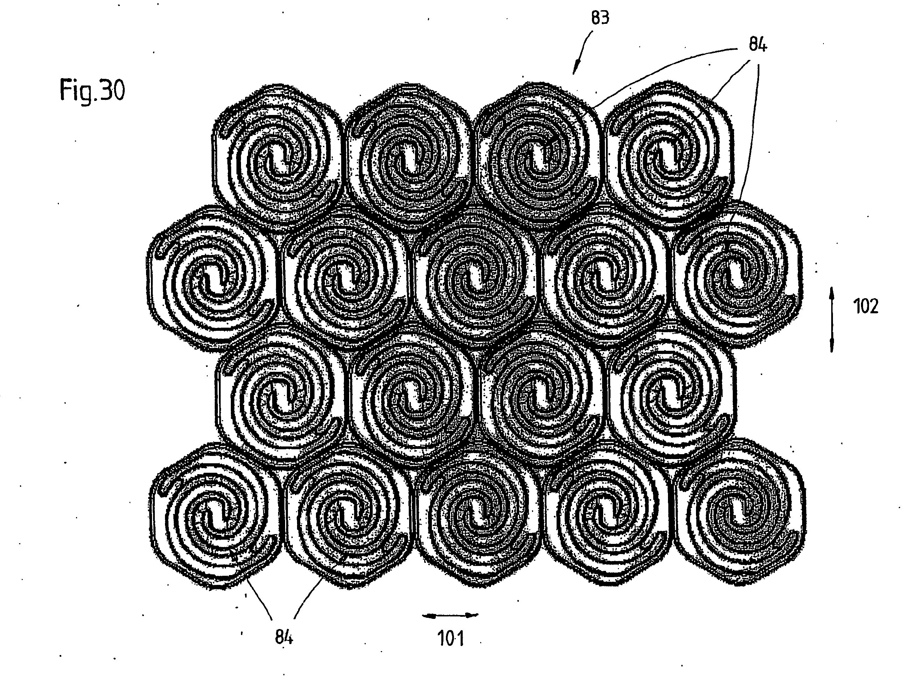

Fig. 30 zeigt eine Einrichtung gemäß einer ersten Ausgestaltungsform. Die Einrichtung 83 zur Polsteraufnahme für die Unterpolsterung von Sitz- und/oder Liegemöbeln besteht aus einer Vielzahl von benachbart angeordneten Auflagerelementen 84. Die im weiteren noch zu beschreibenden Polsteraufnahmen 86 eines jeden Auflagerelementes 84 sind ringförmig ausgebildet und weisen eine sechseckige Außenkontur auf, so daß die Auflagerelemente 84 in Querrichtung 102 versetzt zueinander angeordnet sind. In Längsrichtung 101 bilden die Auflagerelemente 84 eine Reihe ohne Versatz. Es versteht sich jedoch von selbst, daß auch in Längsrichtung 101 eine versetzte Anordnung der einzelnen Auflagerelemente 84 möglich ist, beispielsweise dann, wenn die Außenkontur der ringförmigen Polsteraufnahme mehr als sechs Ecken aufweist. Eine beliebige Ausgestaltung ist hier denkbar.

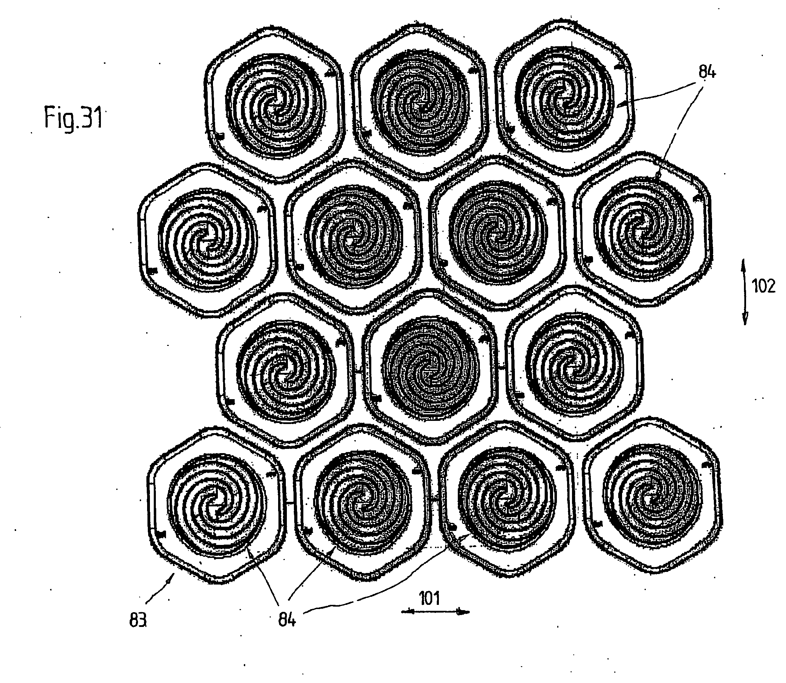

Ein weiteres Ausführungsbeispiel der Vorrichtung zeigt Fig. 31. Auch hier wird die Einrichtung durch eine Vielzahl von benachbart zueinander angeordneten Auflagerelementen 84 gebildet, wobei im Unterschied zum Ausführungsbeispiel nach Fig. 30 die in Fig. 31 gezeigten Auflagerelemente 2 voneinander unter Belassung eines Spaltraumes angeordnet sind. Der Spaltraum kann je nach Ausgestaltungsform wahlweise bemessen sein.

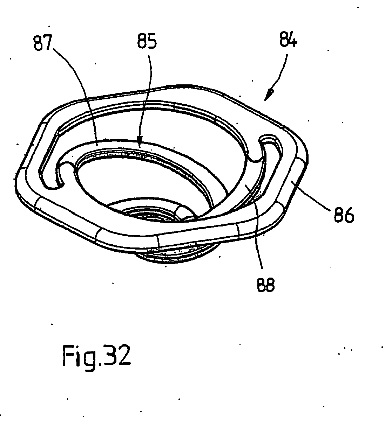

Die Fig. 32 zeigt das Auflagerelement 84, wie es in der Einrichtung nach den Fig. 30 und 31 zur Verwendung kommen kann in einer ersten Ausgestaltungsform. Zu erkennen ist, daß das Auflagerelement 84 aus einem Federelement 85 einerseits und einer Polsteraufnahme 86 andererseits besteht. Das Federelement 85 ist seinerseits aus zwei Federarmen 87 und 88 gebildet, die sich ausgehend von einem Basisabschnitt 89 wendelförmig erstrecken. Dem Basisabschnitt 89 gegenüberliegend ist die Polsteraufnahme 86 an den Federarmen 87 und 88, d. h. dem Federelement 85 angeordnet. In der Ausgestaltungsform nach den Fig. 32 ist das Auflagerelement 84 einstückig ausgebildet, d. h. das Federelement 85 bildet zusammen mit der Polsteraufnahme 86 eine einstückige Baukomponente.

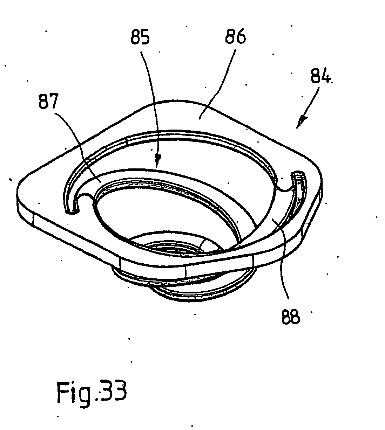

Wie Fig. 32 zu entnehmen ist, ist die Polsteraufnahme 86 ringförmig ausgestaltet und verfügt über eine sechseckige Außenkontur, wie bereits anhand der Fig. 1 und 2 erläutert. Eine alternative Ausgestaltungsform zeigt die Fig. 33. Im Unterschied zu der Fig. 32 zeigt die Fig. 33 ein Auflagerelement mit einer Polsteraufnahme 86, die eine fünfeckige Außenkontur aufweist. Im übrigen entspricht das Auflagerelement 84 der Fig. 33 dem Auflagerelement 84 der Fig. 32.

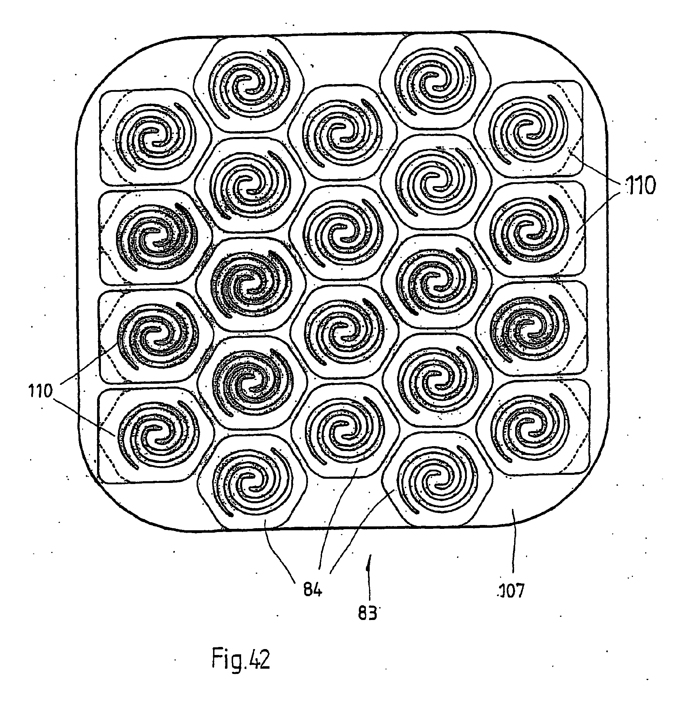

Vorzugsweise werden die Auflagerelemente 84 nach Fig. 32 bzw. 33 kombiniert miteinander verwendet, um so eine zu den Abschlußseiten bündige Einrichtung 83 zu schaffen, wie dies beispielhaft in Fig. 42 gezeigt ist, die im weiteren noch näher erläutert werden wird.

Das Auflagerelement 84 gemäß der Fig. 32 bzw. 33 ist als Spritzgußteil einstückig ausgebildet und besteht aus Kunststoff. Es ist besonders pflegeleicht und korrosionsbeständig.

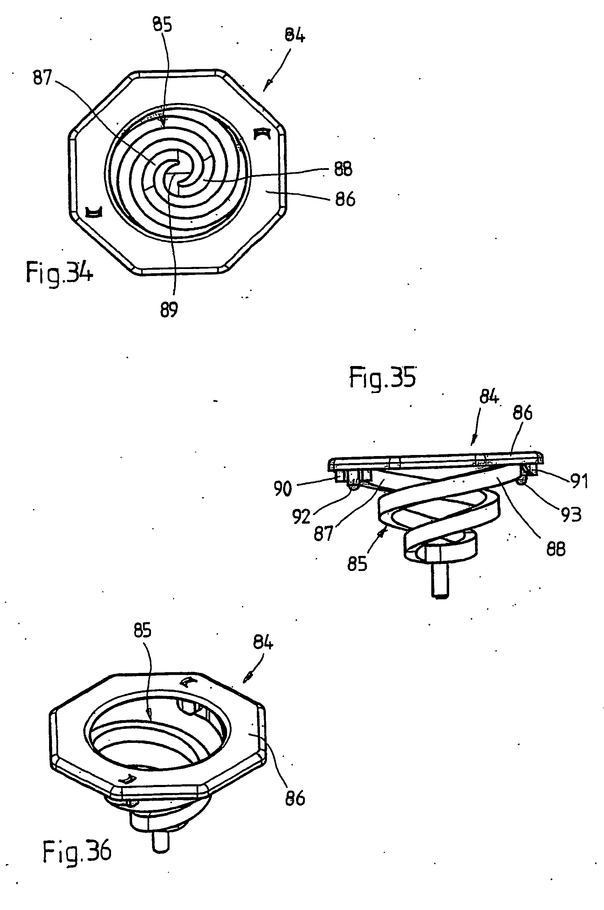

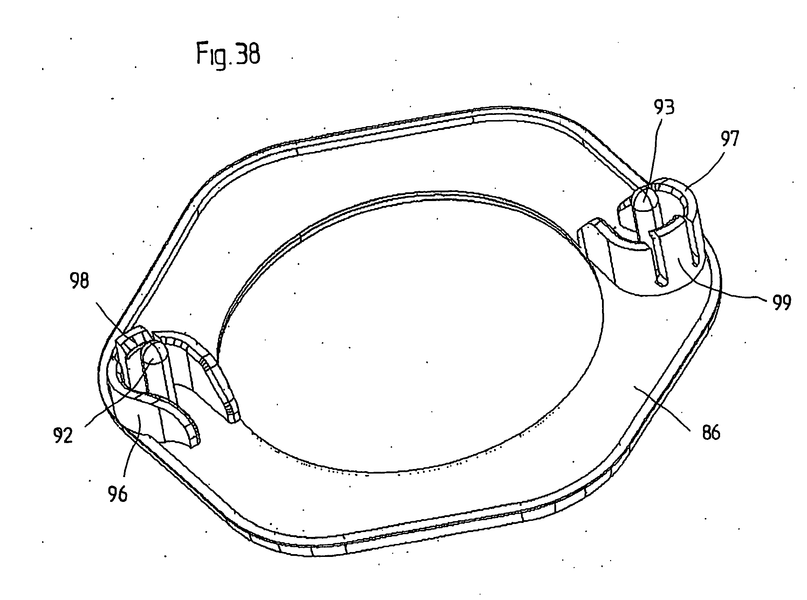

Die Fig. 34 bis 38 zeigen in unterschiedlicher Ansicht eine alternative Ausgestaltung des Auflagerelementes 84. Auch dieses Auflagerelement 84 besteht aus einem Federelement 85 einerseits und einer Polsteraufnahme 86 andererseits. Im Unterschied zur vorerläuterten Alternative ist das Auflagerelement 84 gemäß der Fig. 34 bis 38 allerdings nicht einstückig ausgebildet, vielmehr bestehen das Federelement 85 und die Polsteraufnahme 86 aus jeweils separaten Bauteilen, die wahlweise miteinander kombinierbar sind. Der Vorteil dieser Ausgestaltungsform liegt insbesondere darin, daß das Federelement 85 und die Polsteraufnahme 86 aus unterschiedlichen Materialien gebildet sein können. Dabei bestehen sowohl das Federelement 85 als auch die Polsteraufnahme 86 jeweils aus Kunststoff und sind aus Spritzgußteilen ausgebildet.

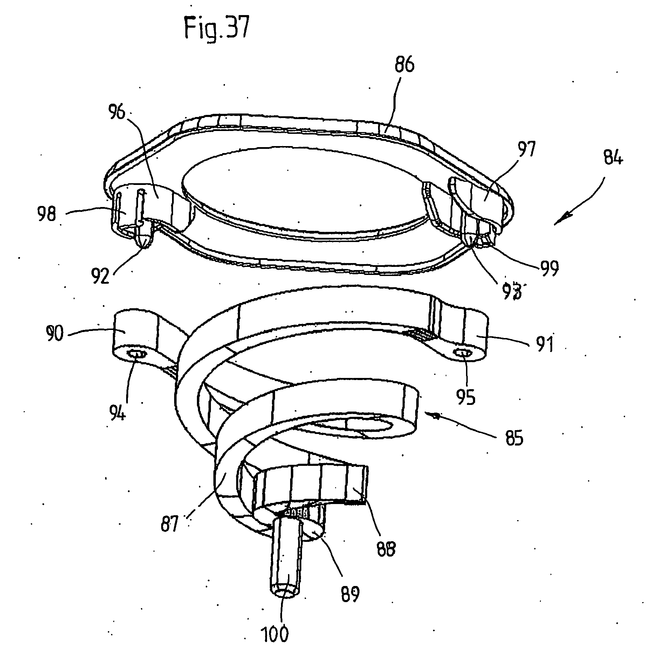

Zur Verbindung von Federelement 85 und Polsteraufnahme 86 dienen am Federelement 85 und an der Polsteraufnahme ausgebildete Verbindungsmittel, deren Ausgestaltung insbesondere der Fig. 37 entnommen werden kann. Wie diese Fig. zeigt, bilden die Federarme 87 und 88 des Federelements 85 einendseitig jeweils eine Aufnahme in Form eines Auges 90 bzw. 91 aus. Ein jedes dieser Augen 90 bzw. 91 trägt eine Durchgangsbohrung 94 bzw. 95. Zu diesen Durchgangsbohrungen 94 bzw. 95 korrespondierend ausgebildete Stifte 92 bzw. 93 sind federelementseitig an der Polsteraufnahme 86 angeordnet, wie insbesondere Fig. 11 erkennen läßt. Im montierten Zustand greifen diese Stifte 92 bzw. 93 in die Bohrungen 94 bzw. 95 des Federelements 85 ein, wodurch eine lagersichere Anordnung der Polsteraufnahme 86 am Federelement 85 sichergestellt ist. Die Stifte 92 bzw. 93 der Polsteraufnahme 86 sind jeweils von einer gehäuseartigen Aufnahme 96 bzw. 97 umgeben, welche Aufnahmen im montierten Zustand des Auflagerelementes 84 die jeweils zugehörigen Augen 90 bzw. 91 des Federelements 85 aufnehmen. Um einer ungewollten Trennung von Federelement 85 und Polsteraufnahme 86 entgegenzuwirken, verfügt eine der jeden Aufnahmen 96 bzw. 97 über eine Rastnase 98 bzw. 99. Diese Rastnasen 98 bzw. 99 hintergreifen im montierten Zustand des Auflagerelementes 84 die jeweils zugehörigen Augen 90 bzw. 91 des Federelements 85. Die Rastnasen 98 bzw. 99 sind federelastisch ausgebildet, so daß die Polsteraufnahme 86 bei Bedarf vom jeweils zugehörigen Federelement 85 getrennt werden kann, beispielsweise zu Reinigungs- oder Reparaturzwecken.

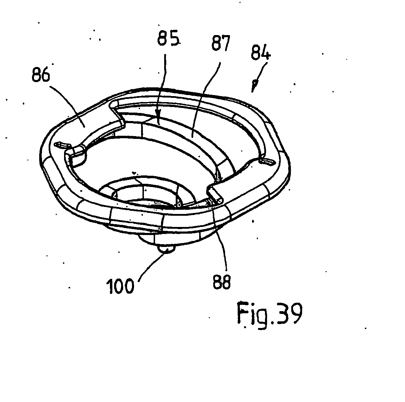

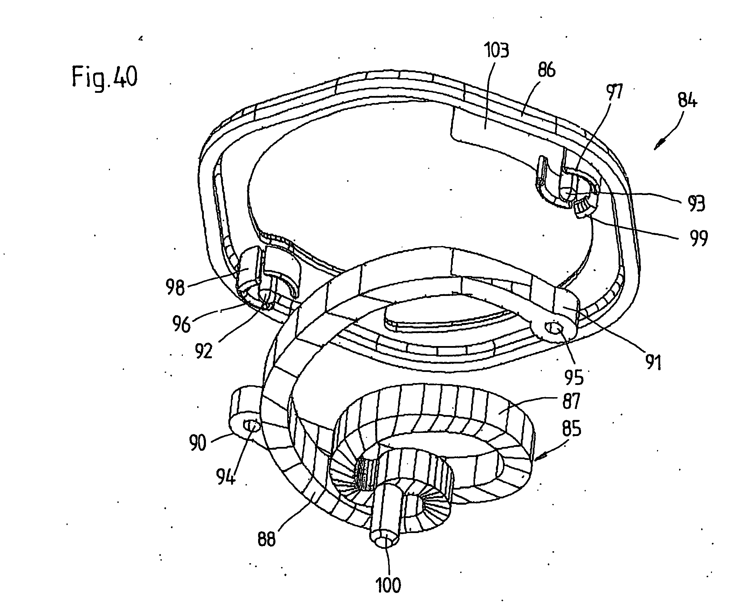

Die Fig. 39 und 40 zeigen in verschiedener Ansicht eine weitere Ausgestaltung des Auflagerelementes 84. Die hier dargestellte Ausführungsform entspricht im wesentlichen der gemäß den Fig. 34 bis 38, wobei im Unterschied zu dieser Ausgestaltungsform vorgesehen ist, daß die am Polsterelement 86 ausgebildeten Auflagerflächen 21 für die Federarme 87 und 88 des Federelements 85 lediglich im Bereich der Aufnahmen 96 und 97 ausgebildet sind. Im Unterschied zur vorerläuterten Ausführungsform sind die Auflagerflächen 103 mithin nicht durchgehend ausgebildet.

Den vorerläuterten Ausführungsformen ist gemein, daß das Federelement 85 des Auflagerelementes 84 zwei wendelförmig ausgebildete Federarme 87 und 88 aufweist, mithin zweizügig ausgebildet ist. Auch andere Ausgestaltungsformen sind hier denkbar, beispielsweise drei- oder vierzügig ausgebildete Federelemente. Auch ist den vorerläuterten Auflagerelementen 84 gemein, daß das Federelement 85 und/oder die Polsterauflage 86 aus Kunststoff bestehen und als Spritzgußteile ausgebildet sind.

Zur Anordnung der Auflagerelemente 84 an einem Gegenstück, beispielsweise einem Tragrahmen, einer Tragplatte, einem Traggerüst, einer Lattenanordnung oder dergleichen verfügt ein jedes der Auflagerelemente 84 über einen der Polsteraufnahme 86 gegenüberliegend angeordneten stiftfrömigen Fortsatz 100, der vorzugsweise einstückig mit dem Federelement 85 ausgebildet ist. Die Ausgestaltung dieses stiftförmigen Fortsatzes 100 ist beispielhaft in den Fig. 35, 36, 37, 39 oder 40 gezeigt. Das in diesen Figuren nicht näher dargestellte Gegenstück verfügt über zu den Fortsätzen 100 korrespondierend ausgebildete Bohrungen, in die diese zwecks lagersicherer Anordnung der Auflagerelemente 84 eingesteckt werden können. Zwecks verdrehsicheren Anordnung weisen die stiftförmigen Fortsätze 100 vorzugsweise einen von der Kreisform abweichenden Querschnitt auf. Ergänzend können zudem Rastmittel vorgesehen sein, die ein unbeabsichtigtes Entfernen der stiftartigen Fortsätze 100 aus den am Gegenstück korrespondierend ausgebildeten Bohrungen verhindern.

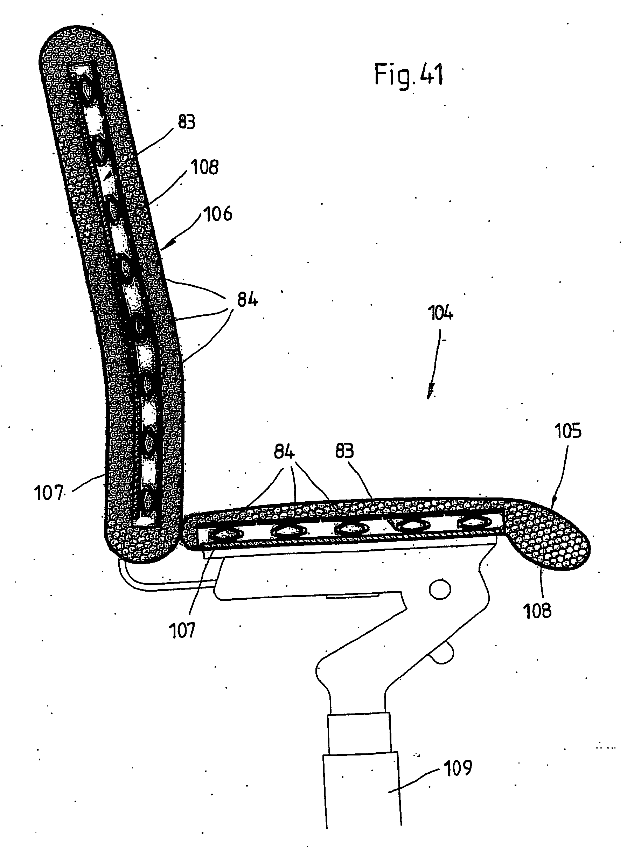

Eine beispielhafte Verwendung der Einrichtung 83 zeigen die Fig. 40 und 41 anhand eines Bürostuhls 104.

Wie Fig. 40 erkennen läßt, verfügt der Bürostuhl 104 über ein Gestell 109, welches sowohl eine Sitzfläche 105 als auch eine Rückenfläche 106 trägt. Zur Hinterpolsterung des Polstermaterials 108 sowohl der Sitzfläche 105 als auch der Rückenfläche 106 dienen die anhand der vorherigen Figuren beschriebenen Auflagerelemente 84, wobei die Auflagerelemente 84 der Rückenfläche 106 eine erste erfindungsgemäße Einrichtung 1 und die Auflagerelemente 84 der Sitzfläche 105 eine zweite erfindungsgemäße Einrichtung 83 bilden.

In der schematischen Schnittdarstellung nach Fig. 41 ist zu erkennen, daß die Auflagerelemente 84 sowohl der Sitzfläche 105 als auch der Rückenfläche 106 jeweils auf einer Trägerplatte 107 montiert sind. Diese Trägerplatte 107 dient der Abstützung der hierauf angeordneten Auflagerelemente 84, wobei zur Verbindung der Trägerplatte 107 und der Auflagerelemente 84 vorgesehen sein kann, daß die Trägerplatte 107 Bohrungen aufweist, in die die stiftförmigen Fortsätze 100 der Auflagerelemente 84, die der besseren Übersicht wegen in Fig. 41 nicht dargestellt sind, eingesteckt sind. Alternativ zu dieser Ausgestaltungsform kann auch vorgesehen sein, daß die Auflagerelemente mit der zugehörigen Trägerplatte 107 verschraubt, vernietet, verklebt oder sonst wie verbunden sind. Entscheidend für die Erfindung ist allein, daß die Auflagerelemente 84 der Sitzfläche 105 bzw. die Auflagerelemente 84 der Rückenfläche 106 zusammen jeweils eine erfindungsgemäße Einrichtung 83 bilden, die der Aufnahme, d. h. Unterpolsterung des Polstermaterials 108 dienen.

Wie der Fig. 41 ohne weiteres zu entnehmen ist, wird durch die Einrichtungen 83 sowohl bezüglich der Sitzfläche 105 als auch bezüglich der Rückenfläche 106 ein Volumenraum unterhalb des jeweils zugehörigen Polstermaterials 108 gebildet. Dieser Volumenraum dient in vorteilhafterweise zur Be- und Entlüftung des Polstermaterials 108, wodurch der Sitzkomfort insbesondere bei einem längeren Sitzen deutlich erhöht wird. Von Vorteil der erfindungsgemäßen Einrichtung 83 ist zudem, daß die jeweils zugehörigen Auflagerelemente 84 aus Federelementen 85 gebildet sein können, die unterschiedliche Federungseigenschaften zur Verfügung stellen. So kann beispielsweise vorgesehen sein, daß die Federelemente der Sitzfläche 105 sehr viel steifer ausgebildet sind als die Federelemente 85 der Rückenfläche 106. Auch kann vorgesehen sei, daß die Federelemente innerhalb sowohl der Sitzfläche 105 als auch innerhalb der Rückenfläche 106 unterschiedliche Federungseigenschaften aufweisen. So kann beispielsweise vorgesehen sein, daß die Einrichtung 83 der Sitzfläche 105 im mittleren Bereich Auflagerelemente 84 aufweist, deren Federelemente steifer ausgebildet sind als die Federelemente der Auflagerelemente im Randbereich der Einrichtung 83. Einer durch die normale Sitzposition eines Sitzenden bedingte unterschiedliche Belastung der Sitzfläche 105 wird so Rechnung getragen.

Die Fig. 42 zeigt beispielhaft in einer Ansicht von oben die Anordnung der Federelemente 85 auf der Trägerplatte 107 anhand der Sitzfläche 105. Wie hier zu erkennen ist, sind die Auflagerelemente 84 in Reihen versetzt zueinander angeordnet, wobei die Polsteraufnahme der Auflagerelemente 84 eine sechseckige Außenkontur aufweisen. Zur Ausbildung einer bündigen Abschlußkante der Einrichtung 83 können randseitig anstelle von sechseckig ausgebildeten Polsteraufnahmen 86 auch fünfeckig ausgebildete Polsteraufnahmen 86 eingesetzt werden, wie anhand der Auflagerelemente 110 in Fig. 42 beispielhaft dargestellt.

### Bezugszeichenliste:

| | | | |
|---|---|---|---|
| 1 | Auflagerelement | 43 | Mittelabschnitt |
| 2 | Kopfplatte | 44 | Durchbruch |
| 3 | Federelement | 45 | Aufnahmebereich |
| 4 | Verbindungselement | 46 | Tragelement |
| 5 | Stiftende | 47 | Federkörper |
| 6 | Durchbrüche | 48 | Basisteil |
| 7 | Basisteil | 49 | Stift |
| 8 | Grundkörper | 50 | Tragkonstruktion |
| 9 | Rand | 51 | Bohrung |
| 10 | Bohrung | 52 | Verbindungselement |
| 11 | Federkörper | 53 | Grundkörper |
| 12 | Stift | 54 | Rand |
| 13 | Aufnahme | 55 | Bohrung |
| 14 | Verbindungseinrichtung | 56 | Auflagerelement |
| 15 | Formelement | 57 | Fußabschnitt |
| 16 | Trägerplatte | 58 | Kopfabschnitt |
| 17 | Aufnahme | 59 | Beinabschnitt |
| 18 | Federelement | 60 | Beckenabschnitt |
| 19 | Kopfabschnitt | 61 | Gelenk |
| 20 | Basisabschnitt | 62 | Gelenk |
| 21 | Federarm | 63 | Gelenk |
| 22 | Federkörper | 64 | Auflagerfläche |
| 23 | Halteelement | 65 | Kragen |
| 24 | Durchbruch | 66 | Verbinder |
| 25 | Versteifungsrippe | 67 | Stopfenförmiger Abschnitt |
| 26 | Rastmittel | 68 | Kragen |
| 27 | Höhenrichtung | 69 | Dichtlippe |
| 28 | Unterseite | 70 | Dichtlamelle |
| 29 | Endbereich | 71 | Ausnehmung |
| 30 | Endbereich | 72 | erster Abschnitt |
| 31 | Hinterschnitt | 73 | zweiter Abschnitt |
| 32 | Kopfplatte | 74 | Rastmittel |
| 33 | Tragkonstruktion | 75 | Verstärkungsrippe |
| 34 | Verbindungselement | 76 | Nut |
| 35 | Ausnehmung | 77 | Höhenrichtung |
| 36 | hülsenförmiger Körper | 78 | Basis |
| 37 | Schwert | 79 | Funktionselement |
| 38 | Aufnahmeelement | 80 | Verbindungselement |
| 39 | kreisförmiger Abschnitt | 81 | Hinterschneidung |
| 40 | Flächenabschnitt | 82 | Ausnehmung |
| 41 | Verstärkungsrippe | 83 | Einrichtung |
| 42 | Rippe | 84 | Auflagerelement |
| 85 | Federelement | 101 | Längsrichtung |
| 86 | Polsteraufnahme | 102 | Querrichtung |
| 87 | Federarm | 103 | Auflagerfläche |
| 88 | Federarm | 104 | Bürostuhl |
| 89 | Basisabschnitt | 105 | Sitzfläche |
| 90 | Auge | 106 | Rückenfläche |
| 91 | Auge | 107 | Trägerplatte |
| 92 | Stift | 108 | Polstermaterial |
| 93 | Stift | 109 | Gestell |
| 94 | Öffnung | 110 | Auflagerelement |
| 95 | Öffnung | | |
| 96 | Aufnahme | | |
| 97 | Aufnahme | | |
| 98 | Rastnase | | |
| 99 | Rastnase | D_{A} = | Außendurchmesser |
| 100 | stiftartiger Fortsatz | L_{H}= | Längserstreckung in Höhenrichtung |

## Patentansprüche

1. Auflagerelement, aufweisend eine Kopfplatte (2) und ein daran angeordnetes Federelement (3), wobei das Federelement (3) wendelförmig und nach Art eines Kegels ausgebildet ist, wobei die Kopfplatte (2) und das Federelement (3) aus Kunststoff gebildet sind, **dadurch gekennzeichnet, dass** das Federelement (3) mehrzügig ausgebildet ist und dass ein Verbindungselement (4) vorgesehen ist, das zur Befestigung des Federelements (3) an einer Trägerplatte (16) der Kopfplatte (2) gegenüberliegend auswechselbar am Federelement (3) angeordnet ist, mit einem stopfenförmigen Abschnitt (8), welcher in eine an der Trägerplatte (16) ausgebildete Ausnehmung (17) einsteckbar ist, zu welchem Zweck der stopfenförmige Abschnitt (8) korrespondierend zur Ausnehmung (17) der Trägerplatte (16) ausgebildet ist, wobei der stopfenförmige Abschnitt (8) seinerseits eine Ausnehmung (10) zur Aufnahme eines am Federelement (3) angeordneten Verbindungselementes (12) aufweist.

2. Auflagerelement nach Anspruch 1, **dadurch gekennzeichnet, daß** das Federelement (3) auswechselbar an der Kopfplatte (2) angeordnet ist.

3. Auflagerelement nach Anspruch 1 oder 2, **dadurch gekennzeichnet, daß** der stopfenförmige Abschnitt (8) außenumfangsseitig radial nach außen gerichtete Verstärkungsrippen (75) aufweist.

4. Auflagerelement nach Anspruch 1, 2 oder 3 **dadurch gekennzeichnet, daß** der stopfenförmige Abschnitt (8) anderendseitig einen Kragen (9) trägt, der im montierten Zustand des Verbindungselements (4) auf der Oberseite der Trägerplatte (16) anliegt.

5. Auflagerelement nach Anspruch 4, **dadurch gekennzeichnet, daß** der Kragen (9) eine Dichtlippe (69) aufweist.

6. Auflagerelement nach Anspruch 4 oder 5, **dadurch gekennzeichnet, daß** der Kragen (9) auf seiner der Trägerplatte (16) zugewandten Unterseite Dichtlamellen (70) aufweist.

## Claims

1. A bearing element comprising an end plate (2) and a spring element (3) mounted thereon, wherein the spring element (3) is spiral-shaped and designed like a cone, wherein the end plate (2) and the spring element (3) are made of synthetic material, **characterized in that** the spring element is a multiple one and that a connection element (4) is provided which is placed on the spring element in an exchangeable manner for fastening the spring element (3) on a carrier plate (16) opposite the end plate (2), comprising a plug-shaped portion (8) which can be inserted into a recess (17) formed in the carrier plate (16), for which purpose the plug-shaped portion (8) is designed correspondingly to the recess (17) of the carrier plate (16), wherein the plug-shaped portion (8), as far as it is concerned, comprises a recess (10) for receiving a connection element (12) mounted on the spring element (3).

2. A bearing element according to claim 1, **characterized in that** the spring element (3) is located on the end plate (2) in an exchangeable manner.

3. A bearing element according to claim 1 or 2, **characterized in that** the plug-shaped portion (8) comprises radially outwards directed reinforcing ribs on the side of the outer perimeter.

4. A bearing element according to claim 1, 2 or 3, **characterized in that** the plug-shaped portion (8) carries a collar (9) on the side of the other end, which collar sits close on the upper side of the carrier plate (16) in the mounted state of the connection element (4).

5. A bearing element according to claim 4, **characterized in that** the collar (9) comprises a sealing lip (69).

6. A bearing element according to claim 4 or 5, **characterized in that** the collar (9) comprises sealing lamellas (70) on its lower side facing the carrier plate (16).

## Revendications

1. Elément d'appui comprenant une plaque de base (2) et un élément de ressort (3) monté sur celle-ci, l'élément de ressort (3) ayant une forme hélicoïdale et étant configuré à la façon d'un cône, la plaque de base (2) et l'élément de ressort (3) étant fabriqués en matière artificielle, **caractérisé en ce que** l'élément de ressort (3) est un élément multiple et qu'un élément de jonction (4) est prévu qui est disposé sur l'élément de ressort (3) d'une manière échangeable pour fixer l'élément de ressort à une plaque support (16) opposée à la plaque de base (2), comprenant une section sous forme de bouchon (8) qui est susceptible d'être insérée dans un évidement (17) formé dans la plaque support (16), à la fin de quoi la section sous forme de bouchon (8) a une forme correspondante à l'évidement (17) de la plaque support (16), la section sous forme de bouchon (8) comprenant de son côté un évidement (10) pour recevoir un élément de jonction (12) disposé sur l'élément de ressort (3).

2. Elément d'appui selon la revendication 1, **caractérisé en ce que** l'élément de ressort (3) est disposé sur la plaque de base (2) de manière échangeable.

3. Elément d'appui selon la revendication 1 ou la revendication 2, **caractérisé en ce que** la section sous forme de bouchon (8) comprend des nervures de renforcement (75) radialement dirigées vers l'extérieur du côté de la périphérie extérieure.

4. Elément d'appui selon les revendications 1, 2 ou 3, **caractérisé en ce que** la section sous forme de bouchon (8) porte un collet (9) du côté de l'autre extrémité, lequel s'appuie sur la face supérieure de la plaque support (16) dans l'état monté de l'élément de jonction (4).

5. Elément d'appui selon la revendication 4, **caractérisé en ce que** le collet (9) comprend une lèvre d'étanchéité (69).

6. Elément d'appui selon la revendication 4 ou la revendication 5, **caractérisé en ce que** le collet (9) comprend des lamelles d'étanchéité (70) sur sa face inférieure qui fait face à la plaque support (16).
